# EUROPÄISCHE PATENTANMELDUNG

(11) **EP 3 482 963 A1**
(43) Veröffentlichungstag der Anmeldung: **15.05.2019**
(21) Anmeldenummer: 17201462.3
(22) Anmeldetag: 13.11.2017
(51) Int. Cl.: B41M 5/333, C08G 63/08, C08G 63/91, C09D 167/04, C08L 67/04

(54) **WÄRMEEMPFINDLICHES AUFZEICHNUNGSMATERIAL AUF BASIS VON PLA**

(71) Anmelder: Mitsubishi HiTec Paper Europe GmbH, 33699 Bielefeld (DE)
(72) Erfinder: Becerra Siabato, Diana Valentina, 33602 Bielefeld (DE); Wilke, Nora, 24943 Flensburg (DE); Neukirch, Matthias, 24943 Flensburg (DE)
(74) Vertreter: Eisenführ Speiser

(57) **Zusammenfassung**

Die vorliegende Erfindung betrifft eine Beschichtungszusammensetzung zur Herstellung eines wärmeempfindlichen Aufzeichnungsmaterials oder wärmeempfindliche Aufzeichnungsschicht, umfassend einen oder mehrere Farbstoffvorläufer und einen oder mehrere Farbentwickler auf Basis von Milchsäure-Einheiten, sowie eine Streichfarbe zur Herstellung einer Beschichtungszusammensetzung oder einer wärmeempfindlichen Aufzeichnungsschicht, umfassend einen oder mehrere Farbstoffvorläufer und einen oder mehrere Farbentwickler auf Basis von Milchsäure-Einheiten, und weiterhin ein wärmeempfindliches Aufzeichnungsmaterial, umfassend ein Trägersubstrat und eine erfindungsgemäße wärmeempfindliche Aufzeichnungsschicht, sowie ein Verfahren zur Herstellung dieses wärmeempfindlichen Aufzeichnungsmaterials und die Verwendung dieses wärmeempfindlichen Aufzeichnungsmaterials. Die vorliegende Erfindung betrifft hierbei auch eine solche Beschichtungszusammensetzung oder wärmeempfindliche Aufzeichnungsschicht, die ferner mindestens einen weiteren, nicht auf Milchsäure-Einheiten basierten Farbentwickler enthält. Schließlich betrifft die Erfindung auch eine Verbindung auf Basis von Milchsäure-Einheiten, vorzugsweise zur Verwendung als Farbentwickler im vorstehenden Zusammenhang, eine solche Verwendung selbst, und ein Verfahren zur Herstellung dieser Verbindung auf Basis von Milchsäure-Einheiten.

## Beschreibung

Die vorliegende Erfindung betrifft eine Beschichtungszusammensetzung zur Herstellung eines wärmeempfindlichen Aufzeichnungsmaterials oder wärmeempfindliche Aufzeichnungsschicht, umfassend einen oder mehrere Farbstoffvorläufer und einen oder mehrere Farbentwickler auf Basis von Milchsäure-Einheiten, sowie eine Streichfarbe zur Herstellung einer Beschichtungszusammensetzung oder einer wärmeempfindlichen Aufzeichnungsschicht, umfassend einen oder mehrere Farbstoffvorläufer und einen oder mehrere Farbentwickler auf Basis von Milchsäure-Einheiten, und weiterhin ein wärmeempfindliches Aufzeichnungsmaterial, umfassend ein Trägersubstrat und eine erfindungsgemäße wärmeempfindliche Aufzeichnungsschicht, sowie ein Verfahren zur Herstellung dieses wärmeempfindlichen Aufzeichnungsmaterials und die Verwendung dieses wärmeempfindlichen Aufzeichnungsmaterials. Die vorliegende Erfindung betrifft hierbei auch eine solche Beschichtungszusammensetzung oder wärmeempfindliche Aufzeichnungsschicht, die ferner mindestens einen weiteren, nicht auf Milchsäure-Einheiten basierten Farbentwickler enthält. Schließlich betrifft die Erfindung auch eine Verbindung auf Basis von Milchsäure-Einheiten, vorzugsweise zur Verwendung als Farbentwickler im vorstehenden Zusammenhang, eine solche Verwendung selbst, und ein Verfahren zur Herstellung dieser Verbindung auf Basis von Milchsäure-Einheiten.

Wärmeempfindliche Aufzeichnungsmaterialien sind seit vielen Jahren bekannt und erfreuen sich einer hohen Beliebtheit. Diese Beliebtheit ist unter anderem darauf zurückzuführen, dass ihre Verwendung mit dem Vorteil verbunden ist, dass die farbbildenden Komponenten in dem Aufzeichnungsmaterial selbst enthalten sind und daher toner- und farbkartuschenfreie Drucker verwendet werden können. Es ist daher nicht mehr nötig, Toner- oder Farbkartuschen zu erwerben bzw. aufzufüllen. So hat sich diese innovative Technologie insbesondere im öffentlichen Personenverkehr, bei öffentlichen bzw. kulturellen Veranstaltungen, im Transport- und Versandgewerbe, im Glücksspielgewerbe, bei Medizintechnik sowie im Einzelhandel weitgehend flächendeckend durchgesetzt.

In der näheren Vergangenheit sind jedoch vermehrt Bedenken im Hinblick auf die Umweltverträglichkeit insbesondere von bestimmten (Farb-)Entwicklern, auch als Farbakzeptoren bezeichnet, teilweise auch von Farbstoffvorläufern, mit denen die (Farb-)Entwickler bei Wärmezufuhr unter Ausbildung einer visuell erkennbaren Farbe reagieren, aufgekommen, die von der Industrie und insbesondere vom Handel nicht außer Acht gelassen werden können. So stehen in letzter Zeit bei den (Farb-)Entwicklern beispielsweise die gut bekannten und naturwissenschaftlich hervorragend untersuchten Komponenten, bekannt als Bisphenol-A (BPA) (2,2 bis (4-hydroxyphenyl)-Propan, 4,4'-(Propan-2,2-diyl)-diphenol, Dian, 4,4'-Isopropylidendi-phenol, 4-[2-(4-Hydroxy-phenyl)propan-2-yl]phenol; CAS® RN 80-05-7) und Bisphenol-S (BPS) (4,4'-Dihydroxydiphenylsulfon, Bis(4-hydroxyphenyl)sulfon, 4,4'-Sulfonyldiphenol; CAS® RN 80-09-1) verstärkt im Zentrum öffentlicher Kritik und werden deshalb mitunter ersetzt durch Pergafast® 201 (*N*-(4-Methylphenylsulfonyl)-*N*'-(3-(4-methylphenylsulfonyloxy)phenyl)harnstoff, der Firma BASF SE), D8, das ist 4-Hydroxy-4'-isopropoxydiphenylsulfon, *N*-[2-(3-Phenylureido)-phenyl]benzolsulfonamid und *N-*{2-[(Phenylcarbamoyl)amino]phenyl}benzolsulfonamid.

Mit dem Ziel, wärmeempfindliche Aufzeichnungsmaterialien insbesondere in ihrer Verwendung als Tickets oder Lottoscheine hinsichtlich ihrer Resistenz gegenüber Umwelteinflüssen wie Wärme, Feuchtigkeit und Chemikalien zu verbessern, wurde die zugrunde liegende Chemie und die Herstellungstechnik zur Erzeugung solcher Aufzeichnungsmaterialien immer weiterentwickelt.

Um den Bedenken hinsichtlich der Umweltverträglichkeit insbesondere von bestimmten (Farb-)Entwicklern bzw. Farbakzeptoren Rechnung zu tragen gab es in jüngerer Zeit nun Bestrebungen, (Farb-)Entwicklern bzw. Farbakzeptoren auf Basis von natürlichen bzw. bio-abbaubaren Verbindungen, z.B. auf Basis von Milchsäure oder Lactid oder Polymeren derselben wie Polymilchsäure oder Polylactid zu entwickeln.

So schlägt die EP 2574645 A1 einen neuartigen Farbakzeptor zur chemischen Reaktion mit einem Farbstoffvorläufer unter Ausbildung einer visuell erkennbaren Farbe vor, bei dem der Farbakzeptor durch Milchsäuremonomere aufgebaut ist, wobei darauf verwiesen wird, dass Polymilchsäure vollständig biologisch abbaubar sei. Da Polymilchsäure jeweils eine nicht nutzbare Hydroxylgruppe und auch nur eine mit den Farbvorstoffvorläufern als reaktiv anzusehende Carboxylgruppe an den beiden Enden der langen Polymermoleküle enthält, wird weiterhin vorgeschlagen, die Anzahl der nutzbaren Carboxylgruppen zu erhöhen, indem die Oligomere der Polymilchsäure n-fach um eine n-wertige Säure, bevorzugte zweiwertige Säure, gruppiert werden. Als Beispiele für eine solche bevorzugte zweiwertige Säure werden Oxalsäure, Malonsäure, Bernsteinsäure, Glutarsäure, Adipinsäure, Pimelinsäure, Korksäure, Azelainsäure, Sebacinsäure, Undecandisäure, Dodecandisäure, Tridecandisäure, Tetradecandisäure, und Hexadecandisäure genannt.

Neben der Herausforderung, wärmeempfindliche Aufzeichnungsmaterialien zur Verfügung zu stellen, deren Farbentwickler zumindest weitgehend biologisch abbaubar und damit weitestgehend ökologisch unbedenklich sind, besteht hinsichtlich eines weiteren Aspekts die ständige Herausforderung, diese Aufzeichnungsmaterialien hinsichtlich ihrer Druckdichte zu optimieren. Hierunter ist insbesondere zu verstehen, ein wärmeempfindliches Aufzeichnungsmaterial durch Zusatz verstärkend wirkender Verbindungen so einzustellen, dass die Druckdichte (d.h. die erwünschte Schwärzung bzw. der Schwärzegrad) des Thermoausdrucks erhöht wird, verglichen mit einem nicht solche verstärkend wirkenden Verbindungen umfassenden wärmeempfindlichen Aufzeichnungsmaterial. Typischerweise bestimmt der Fachmann die Druckdichte eines Thermoausdrucks unter Verwendung eines Densitometers. Hierzu schlägt die EP 2784133 A1 eine Zusammensetzung zur Ausbildung einer visuell erkennbaren Farbe vor, umfassend oder bestehend aus den Komponenten
a) einen, zwei, drei oder mehr Farbentwickler(-Verbindungen), jeweils umfassend eine, zwei, drei oder mehr als drei strukturelle Einheiten der Formel (I) 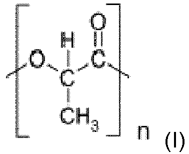 wobei n in jeder der strukturellen Einheiten der Formel (I) eine ganze Zahl größer 1 bedeutet, wobei die jeweilige Bedeutung unabhängig ist von der Bedeutung in gegebenenfalls vorhandenen weiteren strukturellen Einheiten der Formel (I),
b) einen, zwei, drei oder mehr Farbstoffvorläufer(-Verbindungen) zur Ausbildung der visuell erkennbaren Farbe durch Reaktion mit dem bzw. den Farbentwicklern,
und
c) eine, zwei oder mehr Verbindungen, ausgewählt aus der Gruppe bestehend aus Zinksalzen, Ammoniumsalzen und Zinkoxid, vorzugsweise ausgewählt aus der Gruppe bestehend aus Zinkcarbonat, Zinkoxid, Ammoniumhydrogensulfat, Ammoniumnitrat, Ammoniumhydrogenphosphat und Zinkacetat.

Trotz der vorstehend beschriebenen, im Stand der Technik bisher erreichten Ergebnisse, besteht jedoch weiterhin ein ständiger Bedarf nach weiteren wärmeempfindlichen Aufzeichnungsmaterialien für die verschiedensten Verwendungen, wobei diese aufgrund hoher Absatzmengen in einem heftig umkämpften Markt zu geringen Produktionskosten herstellbar sein und deshalb über einen einfachen Aufbau verfügen müssen und - zumindest teilweise, vorzugsweise weitestgehend, besonders bevorzugt aber möglichst vollständig - biologisch abbaubar sein sollten. Eine weitere Herausforderung besteht darin - insbesondere wenn teilweise, vorzugsweise weitestgehend, besonders bevorzugt aber möglichst vollständig biologisch Abbaubarkeit gefordert ist, dass ein bedrucktes wärmeempfindliches Aufzeichnungsmaterial bei seinen typischen Verwendungen als Ticket, Eintrittskarte, Fahrschein, Parkschein u.ä. einer Vielzahl an unterschiedlichen Umgebungseinflüssen, wie Feuchtigkeit, Wärme oder Chemikalien, ausgesetzt werden. Zusätzlich soll die Zusammensetzung bzw. das wärmeempfindliche Aufzeichnungsmaterial unter wirtschaftlich vertretbarem Aufwand herstellbar sein.

So können wärmeempfindliche Aufzeichnungsmaterialien während der normalen Verwendung mit einer Vielzahl unterschiedlicher Substanzen in Kontakt gelangen, die die Beständigkeit des Thermoausdrucks beeinflussen können. Diese umfassen neben Wasser und organischen Lösungsmitteln auch Fette und Öle, die beispielsweise in Handpflegeprodukten enthalten sind und beim Berühren des wärmeempfindlichen Aufzeichnungsmaterials auf dieses übertragen werden können. Insbesondere die Beständigkeit gegenüber Fetten und Ölen ist daher sehr relevant.

Neben der Beständigkeit gegenüber Chemikalien, die mit den wärmeempfindlichen Aufzeichnungsmaterialien in Kontakt geraten können, müssen wärmeempfindliche Aufzeichnungsmaterialien auch eine hohe Beständigkeit gegenüber thermischen Einflüssen aufweisen. Auf der einen Seite sollte das wärmeempfindliche Aufzeichnungsmaterial energieschonend und leicht bedruckt werden können, um beispielsweise bei mobilen Anwendungen wenig Energie zu verbrauchen. Auf der anderen Seite sollte das bedruckte Bild nach dem Druck erhalten bleiben und bei der Einwirkung von Hitze sollte weder das bedruckte Bild ausbleichen, noch sollte sich der ungedruckte Hintergrund verfärben, was dazu führen würde, dass der Druck nicht mehr leserlich ist. Beispielsweise bei Parktickets, die nach dem Drucken hinter der Windschutzscheibe aufbewahrt werden und hierdurch im Sommer hohen Temperaturen und direkter Sonneneinstrahlung ausgesetzt werden, ist die thermische Beständigkeit äußerst relevant.

Auch bei Tickets wie Konzerttickets oder Flugtickets, die häufig eine lange Zeit im Voraus erstellt werden, oder bei Quittungen bzw. Kaufbelegen, die als Kaufnachweis über eine lange Garantiezeit benötigt werden, ist die Beständigkeit des wärmeempfindlichen Aufzeichnungsmaterials sehr wichtig. Insbesondere wenn davon ausgegangen werden muss, dass die wärmeempfindlichen Aufzeichnungsmaterialien in Kontakt mit Feuchtigkeit gelangen können, beispielsweise indem die als Konzertticket, Flugticket oder Kaufbeleg verwendeten Aufzeichnungsmaterialien nah am Körper aufbewahrt werden (z.B. in der Hosentasche) und hierdurch mit Schweiß in Kontakt kommen können, muss sichergestellt werden, dass die Aufzeichnungsmaterialien auch nach einem Kontakt mit Feuchtigkeit gut lesbar bleiben.

Neben den unbedruckten wärmeempfindlichen Aufzeichnungsmaterialien werden auch bedruckte wärmeempfindliche Aufzeichnungsmaterialien - beispielsweise als Flugtickets und Eintrittskarten - eingesetzt, die insbesondere im Offsetdruckverfahren bedruckt werden. Hierbei wird zunächst das wärmeempfindliche Aufzeichnungsmaterial mit allen unveränderlichen Informationen in hoher Stückzahl bedruckt, wie beispielsweise mit Unternehmenskennzeichen, Bildern und Text, sodass ein wärmeempfindlicher Rohling resultiert (z. B. ein Ticketrohling). Die erstellten wärmeempfindlichen Rohlinge werden am Verkaufspunkt in einen Thermodrucker eingelegt und können dann individuell mit Informationen thermisch bedruckt werden, bevor das individualisierte Aufzeichnungsmaterial an den Endkunden übergeben wird. Diese Informationen können bei jedem Druckvorgang variieren - wie beispielsweise Datum, Veranstaltungsname, Platznummer, Kartennummer, Masse, Preis usw.

Im Rahmen des vorliegenden Textes wird zwischen dem Bedrucken von wärmeempfindlichen Aufzeichnungsmaterialien (bzw. Schichtverbunden) durch den Auftrag von Druckfarben auf die Oberfläche des wärmeempfindlichen Aufzeichnungsmaterials, beispielsweise durch Offsetdruck, und dem thermischen Bedrucken von wärmeempfindlichen Aufzeichnungsmaterialien durch das Einwirken von Hitze unterschieden. Beim Einwirken von Hitze, beispielsweise unter Verwendung eines Thermodruckkopfes als Bestandteil eines Thermodruckers, wird eine Farbbildung durch eine chemische Umsetzung des Farbstoffvorläufers induziert.

Es hat sich gezeigt, dass Aufzeichnungsmaterialien mit als (Farb-)Entwicklern, wie diese z.B. in der EP 2574645 A1 bzw. in der EP 2784133 A1 beschrieben sind, zwar bereits brauchbare Thermodruckergebnisse liefern können, allerdings in der Praxis hinsichtlich der dort gestellten hohen Anforderungen an die Qualität des Thermoausdrucks und die Beständigkeit gegenüber Umwelteinflüssen oft nicht oder nicht vollends zufriedenstellend.

Die noch nicht veröffentlichte europäische Patentanmeldung 17150842.7 vom 10. Januar 2017 offenbart neue Verbindungen, die sich als (Farb-)Entwickler eignen können. So beschreibt diese noch nicht veröffentlichte europäische Patentanmeldung ein Mittel auf Basis von Lactid, das bei Erhitzen mit einem Leukofarbstoff reagieren kann, wobei das Mittel die "Formula (I)" erfüllt: 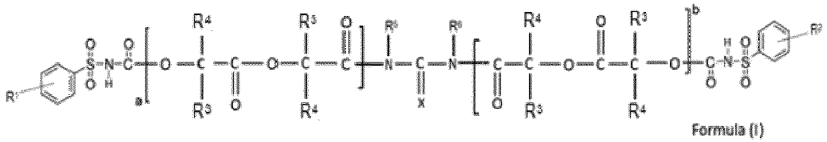 wobei: R1 und R2 unabhängig ein Wasserstoffatom, eine C1-C6-Alkylgruppe, eine C1-C6-Alkoxygruppe oder ein Halogenatom sind; R3, R4, R5 und R6 unabhängig ein Wasserstoffatom, eine C1-C6-Alkylgruppe, eine C3-C6-Cycloalkygruppe oder eine C2-C6-Alkenylgruppe sind; X O, S oder NH ist; und a und b ganzzahlige Werte sind, die die Bedingungen a ≥ 0, b ≥ 0 und (a + b) ≥ 1 erfüllen. Die genannte nicht veröffentlichte Patentanmeldung beschreibt auch ein Verfahren zur Herstellung solcher Verbindungen, wobei das Verfahren die Umsetzung umfasst von: i) einer Verbindung der Formel 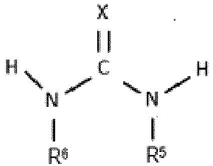 wobei: R5 und R6 unabhängig ein Wasserstoffatom, eine C1-C6-Alkylgruppe, eine C3-C6-Cycloalkygruppe oder eine C2-C6-Alkenylgruppe sind; X O, S oder NH ist; und ii) einem cyclischen Ester einer Hydroxycarbonsäure mit der Formel 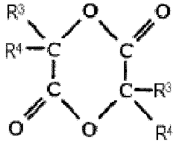 wobei: R3 und R4 unabhängig ein Wasserstoffatom, eine C1-C6-Alkylgruppe, eine C3-C6-Cycloalkygruppe oder eine C2-C6-Alkenylgruppe sind,
wobei zunächst eine Verbindung erhalten wird, welche die "Formula (II)" erfüllt: 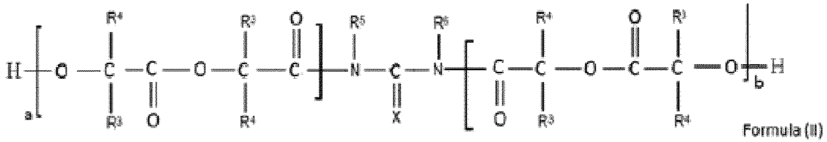 wobei: R3, R4, R5 und R6 unabhängig ein Wasserstoffatom, eine C1-C6-Alkylgruppe, eine C3-C6-Cycloalkygruppe oder eine C2-C6-Alkenylgruppe sind; X O, S oder NH ist; und a und b ganzzahlige Werte sind, die die Bedingungen a ≥ 0, b ≥ 0 und (a + b) ≥ 1 erfüllen. An das vorstehende Verfahren schließt sich dann ein Verfahren zur Herstellung des Mittels der "Formula (I)" an, wobei das Verfahren die folgenden Schritte umfasst:
a) Bereitstellen einer Verbindung der "Formula (II)"; und
b) umsetzen der genannten Verbindung mit mindestens einem Sulfonylisocyanat der "Formula (III)": 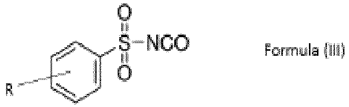
wobei: R ein Wasserstoffatom, eine C1-C6-Alkylgruppe, eine C1-C6-Alkoxygruppe oder ein Halogenatom ist.

In der ersten Stufe dieses Verfahrens können polymere Blöcke der Einheitslängen a und b durch eine Ringöffnungsreaktion oder eine Ringöffnungspolymerisation des cyclischen Esters unter Verwendung eines geeigneten ionischen oder nichtionischen Katalysators gebildet werden, wie in "Ring Opening Polymerization", Vol. I, Seiten 461-521, K.J. Ivin und T. Saegusa (1984) beschrieben. Die Ringöffnungsreaktion oder Polymerisationsreaktion kann bei Raumtemperatur durchgeführt werden, wird jedoch vorzugsweise unter Erwärmen bei einer Temperatur von 100 bis 200 °C oder von 130 bis 190 °C durchgeführt. Wenn die Temperatur niedriger als 100 °C ist, ist die Reaktionsgeschwindigkeit ungünstig niedrig. Wenn die Temperatur andererseits höher als 200 °C ist, wird die Oligomerabbaurate erhöht und Komponenten mit niedrigem Molekulargewicht können verdampfen. Wichtig ist, dass die Reaktion unter wasserfreien Bedingungen und in Abwesenheit von weiteren Verbindungen mit einem aktiven Wasserstoffatom durchgeführt werden sollte. Die Exposition gegenüber atmosphärischer Feuchtigkeit kann vermieden werden, indem das Reaktionsgefäß mit einer inerten, trockenen gasförmigen Decke versehen wird. Die Zwischenverbindung der "Formula (II)" und eine oder mehrere Verbindungen der "Formula (III)" werden in der zweiten Stufe des Verfahrens umgesetzt. Vorzugsweise wird eine einzelne Verbindung der "Formula (III)" so umgesetzt, dass die resultierenden terminalen Gruppen des reaktiven Agens ("Formula (I)") gleich sind. Diese zweite Stufe - nominell die Herstellung eines Sulfonylurethans - ist eine Additionsreaktion und keine Polymerisationsreaktion; daher sind die Molekulargewichte der Zwischenverbindung ("Formula (II)") und der oder jeder Verbindung der "Formula (III)" bestimmend für das Molekulargewicht des Reaktionsprodukts, der Verbindung der "Formula (I)". Beispielhafte Verbindungen der "Formula (III)" umfassen Phenylsulfonylisocyanat, Toluolsolylsulfonylisocyanat und Chlorphenylsulfonylisocyanat. Verfahren zur Herstellung von geeigneten aromatischen Sulfonylisocyanaten und ihr chemisches Verhalten werden unter anderem in: H. Ulrich Chem. Soc. Rev. 65, Seiten 369-376 (1965); US-Patent Nr. 2,666,787; und US-Patent Nr. 3,484,466 beschrieben. Die Reaktion der zweiten Stufe wird typischerweise in einer organischen Lösung und unter wasserfreien Bedingungen durchgeführt. Die Zwischenverbindung der "Formula (II)" wird in einem geeigneten organischen Lösungsmittel dispergiert und unter Rühren wird das Sulfonylisocyanat entweder in reiner Form oder in Lösung zugegeben. Zum Beispiel ist vorgesehen, dass die Reaktion der zweiten Stufe bei einer Temperatur von 30 °C oder 40 °C bis 80 °C durchgeführt werden kann und entweder kann eine gewisse Kühlung des Reaktionsgefäßes oder die Einführung der Reaktanden mit einer langsamen Zugabrate erforderlich sein, um angesichts der exothermen Natur der Reaktion so niedrige Temperaturen aufrechtzuerhalten.

Es besteht weiterhin ein großer Bedarf nach einer Verbesserung des Thermoausdrucks von Aufzeichnungsmaterialien mit auf Milchsäure-Einheiten basierten (Farb-)Entwicklern, insbesondere hinsichtlich der Qualität des Thermoausdrucks und/oder gegenüber verschiedenen Umgebungseinflüssen. Die Aufgabe der vorliegenden Erfindung besteht somit darin, ein wärmeempfindliches Aufzeichnungsmaterial bereitzustellen, das zumindest einen auf Milchsäure-Einheiten basierten (Farb-)Entwickler umfasst und insbesondere hinsichtlich der Qualität des Thermoausdrucks und/oder gegenüber verschiedenen Umgebungseinflüssen verbesserte Eigenschaften aufweist.

Insbesondere soll in einer vorzugsweisen Ausführungsform der Erfindung ein wärmeempfindliches Aufzeichnungsmaterial bereitgestellt werden, das im bedruckten Zustand auch eine gute Beständigkeit gegenüber Fetten und Ölen hat.

Gelöst wird diese Aufgabe durch eine Beschichtungszusammensetzung zur Herstellung eines wärmeempfindlichen Aufzeichnungsmaterials oder wärmeempfindliche Aufzeichnungsschicht, umfassend
- einen oder mehrere Farbstoffvorläufer; und
- einen oder mehrere Farbentwickler, wobei der eine oder zumindest einer der mehreren Farbentwickler eine Verbindung ist, die im Farbentwickler
   a) mindestens eine (lineare) strukturelle Einheit der Milchsäure
   und
   b) unabhängig voneinander zwei endständige Elektronenakzeptorgruppen enthält,
   wobei der eine oder der zumindest eine der mehreren Farbentwickler eine Verbindung der Formel (I) ist, 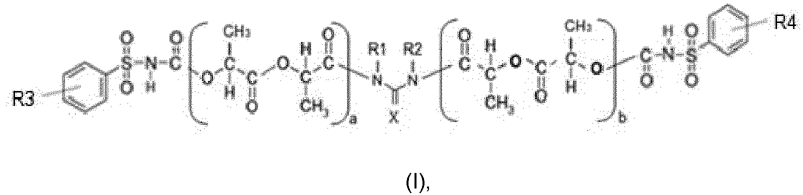 wobei X für O, S oder NH steht; R1 und R2 unabhängig voneinander für ein Wasserstoffatom, eine C1-C6-Alkylgruppe, eine C3-C6-Cycloalkylgruppe oder eine C2-C6-Alkenylgruppe stehen; R3 und R4 unabhängig voneinander für ein
   Wasserstoffatom, eine C1-C6-Alkylgruppe, eine C1-C6-Alkoxygruppe oder eine Halogengruppe stehen; und a und b jeweils für eine ganze Zahl stehen und die Bedingungen a ≥ 0, b ≥ 0 und (a+b) ≥ 1 erfüllen.

In manchen Fällen kann es bevorzugt sein, dass der Farbentwickler zumindest eine der endständigen Elektronenakzeptorgruppen mit einer der strukturellen Einheiten der Formel (Ib) enthält,

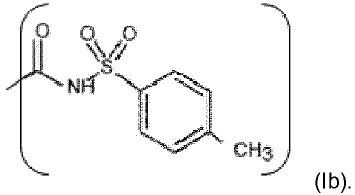

Milchsäure und davon abgeleitete Verbindungen (z.B. u.a. Lactate, Lactoylmilchsäure, Lactid) und Polymere bzw. Oligomere (z.B. Polymilchsäuren, auch Polylactide (PLA) genannt) sind im Stand der Technik bereits gut bekannt.

Milchsäure ist eine Hydroxycarbonsäure die sowohl eine Carboxygruppe als auch eine Hydroxygruppe besitzt und deswegen unter anderem als 2-Hydroxypropionsäure und nach der IUPAC-Nomenklatur als 2-Hydroxypropansäure bezeichnet wird. Die Salze und Ester der Milchsäure heißen Lactate. Als Namen für Milchsäure sind im Stand der Technik gebräuchlich: 2-Hydroxypropansäure, 2-Hydroxypropionsäure, (R)-Milchsäure, (S)-Milchsäure, (RS)-Milchsäure, DL-Milchsäure, (±)-Milchsäure, und E 270. Aufgrund ihrer unterschiedlichen optischen Aktivität wird die D-(-)-Milchsäure (Synonym: (R)-Milchsäure) auch als linksdrehende Milchsäure und die L-(+)-Milchsäure (Synonym: (S)-Milchsäure) auch als rechtsdrehende Milchsäure bezeichnet. Racemische Milchsäure ist ein 1:1-Gemisch aus (R)- und (S)-Milchsäure (D-/L-Milchsäure). Milchsäure wird unter den folgenden Chemical Abstracts Service Registriernummer geführt: CAS® RN 50-21-5 (Milchsäure, allgemein), CAS® RN 598-82-3 (dl-Form), CAS® RN 10326-41-7 (d-Form) und CAS® RN 79-33-4 (I-Form). Die Chemical Abstracts Service Registry Number, CAS® RN ist eine Bezeichnung für eine Registriernummer (RN), die vom Chemical Abstracts Service (CAS) seit 1965 zur eindeutigen Kennzeichnung von chemischen Stoffen verwendet wird.

Milchsäure bildet intermolekular Ester. Unter Abspaltung von Wasser entsteht z.B. als Dimer Lactoylmilchsäure, die beim längeren Stehen oder beim Erhitzen zu Polymilchsäure weiterverestert. Milchsäure wird industriell produziert, die vor allem in der Lebensmittelindustrie sowie zur Herstellung von Polylactiden (PLA; auch: Polymilchsäuren) genutzt werden. Die Herstellung von Milchsäure erfolgt vorzugsweise biotechnologisch über eine Fermentation von Kohlenhydraten (Zucker, Stärke). Etwa 70 bis 90 % der Weltproduktion an Milchsäure wird derzeit fermentativ hergestellt. Daneben kann die Herstellung von Milchsäure auch synthetisch auf der Basis petrochemischer Rohstoffe (Acetaldehyd) erfolgen. Großtechnisch spielt dabei nur die Synthese von Milchsäure aus Acetaldehyd mit Cyanwasserstoff über Lactonitril eine gewisse Rolle. Letzteres wird über den Einsatz von Salzsäure hydrolysiert, wobei neben der Milchsäure Ammoniumchlorid entsteht. Milchsäure ist das Monomer der Polylactide bzw. Polymilchsäuren (PLA), die als biologisch abbaubare Biokunststoffe vielfältige Verwendung finden. PLA weist aufgrund der Molekülstruktur eine biologische Abbaubarkeit auf, wobei hierfür bestimmte Umweltbedingungen nötig sind, die in der Regel in industriellen Kompostieranlagen zu finden sind.

Lactid ist der cyclische Diester der Milchsäure und findet als Ausgangsstoff bei der technischen Herstellung von Polylactiden (Polymilchsäuren) Verwendung. Lactid kann durch säurekatalytische Kondensation von Milchsäure hergestellt werden. Technisch wird es heutzutage aber meist biotechnologisch aus Glucose und Melasse gewonnen. Da Lactid zwei durch jeweils analoge Reste substituierte Stereozentren enthält, gibt es drei isomere Lactide: (S,S)-Lactid, (R,R)-Lactid und (meso)-Lactid. Das Lactid der natürlichen L-Milchsäure [Synonym: (S)-Milchsäure] besitzt (S,S)-Konfiguration. (R,R)-Lactid und (meso)-Lactid besitzen im Vergleich zu (S,S)-Lactid nur geringe Bedeutung. Lactid ist ein farbloses, geruchloses Pulver, das bei Berührung mit Wasser sofort zu Milchsäure hydrolysiert. Aus dem Lactid [genauer: dem (S,S)-Lactid] der L-Milchsäure wird durch ionische Polymerisation Polylactid hergestellt.

Polylactide, auch Polymilchsäuren (kurz PLA, Englisch: "polylactic acid") genannt, sind synthetische Polymere, die zu den Polyestern zählen. Sie sind aus chemisch aneinander gebundenen Milchsäuremolekülen aufgebaut. Daher ist die zwar gebräuchliche Bezeichnung "Polymilchsäure" an sich irreführend, da es sich nicht um ein Polymer mit mehreren sauren Gruppen handelt. Polylactide sind aufgrund des asymmetrischen Kohlenstoffatoms optisch aktiven Polymere und treten in der Form von D- oder als L-Lactide auf, je nachdem, ob sich diese von L-(+)-Milchsäure [Synonym: (S)-(+)-Milchsäure] oder von D-(-)-Milchsäure [Synonym: (R)-(-)-Milchsäure] ableiten.

Die Eigenschaften der Polylactide hängen vor allem von der Molekülmasse, dem Kristallinitätsgrad und gegebenenfalls dem Anteil von Copolymeren ab. Eine höhere Molekülmasse steigert die Glasübergangs- sowie die Schmelztemperatur, die Zugfestigkeit sowie den Elastizitätsmodul (E-Modul) und senkt die Bruchdehnung. Aufgrund der Methylgruppe verhält sich das Material wasserabweisend (hydrophob), wodurch die Wasseraufnahme und somit auch die Hydrolyserate der Hauptbindung gesenkt wird. Weiterhin sind Polylactide in vielen organischen Lösungsmitteln löslich (z. B. Dichlormethan, Trichlormethan; durch Zugabe eines Lösungsmittels wie Ethanol, in dem das Polylactid schlechter löslich ist, kann es wieder ausgefällt werden). PLA weist zahlreiche Eigenschaften auf, die für vielerlei Einsatzgebiete von Vorteil sind: Eine geringe Feuchtigkeitsaufnahme mit hoher Kapillarwirkung, dadurch geeignet für Sport- und Funktionsbekleidung. Eine geringe Flammbarkeit, hohe UV-Beständigkeit und Farbechtheit. Zudem ist die Dichte von PLA relativ gering. Die Biegefestigkeit liegt bei 0,89-1,03 MPa. Unter UV-Beständigkeit wird erstanden, dass die PLA-basiert hergestellten Produkte dem Sonnenlicht und anderen Quellen für Ultraviolettstrahlung (UV-Strahlung) ausgesetzt werden können, ohne dabei Schaden durch die Einstrahlung zu nehmen. Als UV-Strahlung wird derjenige Teil der elektromagnetischen Strahlung bezeichnet, welcher zwischen dem sichtbaren Licht und der Röntgenstrahlung liegt.

Polylactide und Polymilchsäuren können durch unterschiedliche Synthese-Verfahren erzeugt werden. Polylactide sind vor allem durch die ionische Polymerisation von Lactid, einem ringförmigen Zusammenschluss von zwei Milchsäuremolekülen, zugänglich. Während Polylactide durch Ringöffnungspolymerisation erzeugt werden, entstehen Polymilchsäuren durch direkte Kondensationsreaktionen. Umwandlung von Lactid (links) zum Polylactid (rechts) durch thermische und katalytische Ringöffnungspolymerisation. Die Herstellung von Polylactiden bzw. Polymilchsäuren ist im Stand der Technik beschrieben; siehe beispielsweise D. Garlotta, "A Literature Review of Poly(Lactic Acid)", Journal of Polymers and the Environment, Vol. 9, No. 2, April 2001, 63-84 (© 2002). Die Bedingungen, insbesondere die Temperaturen, bei der Herstellung von Polylactiden bzw. Polymilchsäuren (d.h. bei der "Lactide-Polymerisierung") sind abhängig von den zur Polymerisierung eingesetzten Katalysatoren. Beispielsweise bei Temperaturen zwischen 120 und 150 °C sowie der Einwirkung katalytischer Zinnverbindungen (z. B. Zinnoxid) findet eine Ringöffnungspolymerisation statt. Bei kationischer Polymerisierung können die Temperaturen z.B. T < 100 °C und bei anionischer Polymerisierung können die Temperaturen z.B. T ≈ 120 °C betragen. So werden Kunststoffe mit einer hohen Molekülmasse und Festigkeit erzeugt. Lactid selbst lässt sich durch Vergärung von Melasse oder durch Fermentation von Glukose mit Hilfe verschiedener Bakterien herstellen. Darüber hinaus können hochmolekulare und reine Polylactide mit Hilfe der so genannten Polykondensation direkt aus Milchsäure erzeugt werden. In der industriellen Produktion ist allerdings die Entsorgung des Lösungsmittels problematisch.

Nach der Erfindung kann eine Beschichtungszusammensetzung zur Herstellung eines wärmeempfindlichen Aufzeichnungsmaterials oder wärmeempfindliche Aufzeichnungsschicht wie vorstehend definiert bevorzugt sein, wobei der eine oder der zumindest eine der mehreren Farbentwickler der Formel (I) eine Verbindung ist, die eine strukturelle Einheit der Formel (Ic) enthält, 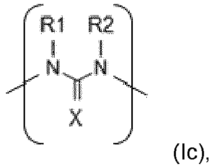 wobei X für O, S oder NH steht und R1 und R2 unabhängig voneinander für ein Wasserstoffatom, eine Methylgruppe, vorzugsweise für ein Wasserstoffatom, stehen. Erindungsgemäß liegen somit ausgewählte Iminoharnstoff-, Harnstoff- oder Thioarnstoffenthaltende Farbentwickler-Strukturen vor.

Nach der Erfindung kann eine Beschichtungszusammensetzung oder wärmeempfindliche Aufzeichnungsschicht wie vorstehend definiert bevorzugt sein, umfassend als Farbentwickler der Formel (I), wobei der Farbentwickler eine oder zwei endständige Elektronenakzeptoren mit einer strukturellen Einheit der Formel (Ib) aufweist,

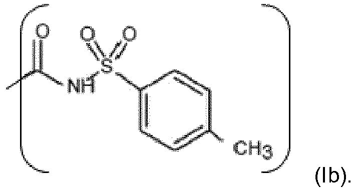

Erfindungsgemäß bevorzugt ist in manchen Fällen eine Beschichtungszusammensetzung oder wärmeempfindliche Aufzeichnungsschicht, wie hierzuvor definiert, wobei die Partikelgrößen, gemessen durch Laserbeugung, des einen oder zumindest eines der mehreren Farbentwickler, jeweils unabhängig voneinander, im Bereich von 0,5 bis 10 µm, vorzugsweise im Bereich von 0,8 bis 8 µm, weiter bevorzugt im Bereich von 0,8 bis 4 µm, liegen.

Erfindungsgemäß bevorzugt ist in manchen Fällen eine Beschichtungszusammensetzung oder wärmeempfindliche Aufzeichnungsschicht, wie hierzuvor definiert, wobei die Partikelgrößen, gemessen als X₅₀-Wert durch Laserbeugung, des einen oder zumindest eines der mehreren Farbentwickler, jeweils unabhängig voneinander, im Bereich von 0,8 bis 2 µm, vorzugsweise im Bereich von 0,85 bis 1,7 µm, und besonders bevorzugt im Bereich von 0,85 bis 1,65 µm, liegen.

Die Bestimmung der Partikelgrößen kann unter Verwendung von Laserbeugung (HELOS-Partikelgrößenanalyse) gemessen werden. Im Rahmen der Erfindung wurde ein Gerät der Sympatec GmbH, Helos (H1453) & Quixel, R1, eingesetzt (Auswertung WINDOX 4).

Die mittlere Teilchengröße kann durch Partikelgrößenanalyse im Laserbeugungsverfahren nach DIN/ISO 13320-1 [1999] bestimmt werden.

Ein Laser-Streulichtspektrometer arbeitet auf Grundlage der statistischen Laserlichtstreuung gemäß DIN/ISO 13320-1 [1999] im Messbereich von 0,01 µm bis 3000 µm. Eine Umstellung am Gerät ist dafür nicht erforderlich. Für die automatisierte Messung wird die Partikelprobe in eine Zirkulationseinheit zur Nassmessung gegeben. Eine integrierte Ultraschallsonde verhindert das Vernetzen der Partikel und macht eine externe Probenvorbereitung überflüssig. Bei der Wechselwirkung von Laserlicht mit Partikeln werden durch Beugung, Brechung, Reflexion und Absorption für die Partikelgröße charakteristische Streulichtmuster erzeugt. Mit der Mie-Theorie kann von diesen Streulichtmustern auf die Partikelgrößenverteilung geschlossen werden.

Bei der Laserbeugung werden Partikelgrößenverteilungen durch Messung der Winkelabhängigkeit der Intensität von gestreutem Licht eines Laserstrahls, der eine dispergierte Kieselsäure-Partikelprobe durchdringt, ermittelt. Hierbei streuen große Partikel Licht mit kleinen Winkeln relativ zum Laserstrahl, während kleine Partikel zu großen Streuwinkeln führen. Die Daten der winkelabhängigen Streulichtintensität werden analysiert und sind die Basis zur Berechnung der Größe der Partikel, die für das Beugungsmuster verantwortlich sind. Dabei wird die Mie-Theorie genutzt. Die Partikelgröße wird als Durchmesser der volumengleichen Kugel angegeben. Die von Mie 1908 entwickelte Streulichttheorie basiert auf der Aussage, dass das von einem Partikel erzeugte Streulichtmuster charakteristische Merkmale aufweist, die bei Kenntnis der optischen Parameter eine eindeutige Größenzuordnung ermöglichen. Für Partikel, die deutlich größer als 10 bis 20 µm sind, wird als Vereinfachung die sogenannte Fraunhofer-Auswertung angeboten, die nur die Lichtbeugung auswertet und damit ohne die korrekten optischen Parameter auskommt.

Es kann erfindungsgemäß bevorzugt sein, dass die erfindungsgemäße Beschichtungszusammensetzung oder wärmeempfindliche Aufzeichnungsschicht, wie hierzuvor definiert, mindestens einen weiteren Farbentwickler aus dem Stand der Technik enthalten kann.

Erfindungsgemäß bevorzugt ist eine Beschichtungszusammensetzung oder wärmeempfindliche Aufzeichnungsschicht, wie hierzuvor definiert, umfassend mindestens einen Farbentwickler, der eine Verbindung ist, die eine phenolfreie Verbindung. Der mindestens eine Farbentwickler ist dann ein sogenannter phenolfreier Farbentwickler. Der Begriff "phenolfreie Verbindung" umfasst hierbei auch Gemische phenolfreier Verbindungen bzw. der Begriff "phenolfreier Farbentwickler" umfasst hierbei auch Gemische phenolfreier Farbentwickler. Als "phenolfreie Verbindung" bzw. "phenolfreier Farbentwickler" werden solche Verbindungen verstanden, die als Abbauprodukte vorzugsweise keine, zumindest aber nicht in Wesentlichen, d.h. die Umwelt beeinträchtigenden und/oder allenfalls unterhalb gesetzlicher Grenzwerte liegende, Mengen an Phenolen in die Umwelt freisetzen. Dies ist wünschenswert, da die biologische Abbaubarkeit vieler Phenole sehr schlecht ist und Phenole stark gewässerschädigend sind und schon in geringen Konzentrationen den Geschmack von Wasser und Fischen beeinträchtigen. Phenole müssen deshalb aus dem Abwasser sehr weitgehend entfernt werden.

Die Erfindung betrifft daher in manchen Fällen bevorzugt eine Beschichtungszusammensetzung oder wärmeempfindliche Aufzeichnungsschicht, wie hierzuvor definiert, umfassend mindestens einen phenolfreien Farbentwickler oder ein Gemisch von phenolfreien Farbentwicklern. Beispielsweise kann sich eine in manchen Fällen bevorzugte Beschichtungszusammensetzung oder wärmeempfindliche Aufzeichnungsschicht, enthaltend mindestens einen phenolfreien Farbentwickler, dadurch auszeichnen, dass neben der Verbindung der Formel (I) ein oder mehrere weitere nicht-phenolische Farbentwickler, vorzugsweise ausgewählt aus der Gruppe der Sulfonyl-Harnstoffe, besonders bevorzugt N'-(p-Toluolsulfonyl)-N'-phenyl-harnstoff, N-(p-Toluolsulfonyl)-N'-3-(p-toluolsulphonyl-oxy-phenyl)-harnstoff (*N*-(4-Methylphenylsulfonyl)-*N*'-(3-(4-methylphenylsulfonyloxy)phenyl)-harnstoff, Pergafast 201), und/oder 4,4'-Bis-(p-Tolylsulfonylureido)-diphenylmethan, und/oder beispielsweise 4-Methyl-N-(2-(3-phenylureido)phenyl)benzolsulfonamid und/oder N-(2-(3-Phenylureido)phenyl)benzolsulfonamid (NKK) vorliegen. NKK kann in einer Alpha- und einer Beta-Modifikation vorliegen, wobei die Alpha-Modifikation einen Schmelzpunkt von 158 °C und die Beta-Modifikation einen Schmelzpunkt von 175 °C aufweist. Weiterhin liegt NKK-Alpha in einer kristallinen Form vor, welche im IR-Spektrum eine Absorptionsbande bei 3322 und 3229 cm⁻¹ aufweist und NKK-Beta liegt in einer kristallinen Form vor, welche im IR-Spektrum eine Absorptionsbande bei 3401±20 cm⁻¹ aufweist.

So kann erfindungsgemäß bevorzugt eine Beschichtungszusammensetzung oder wärmeempfindliche Aufzeichnungsschicht, wie hierzuvor definiert, sein, die ferner mindestens einen weiteren Farbentwickler der Formel (II) enthält,

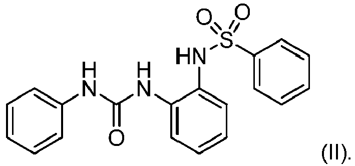

Die Verbindung mit der Formel (II) ist ebenfalls bereits bekannt und wird beispielsweise in der EP 2923851 A1 beschrieben. Sie wird unter der Bezeichnung NKK (N-(2-(3-phenylureido)phenyl)benzolsulfonamid) vertrieben. Der Zusatz von geringen Mengen der Verbindung der Formel (II) zu der erfindungsgemäßen Verbindung der Formel (I) kann, sofern erforderlich oder gewünscht, eine auch bereits gute Feuchtebeständigkeit auch über längere Zeiträume stabilisieren, so dass diese Feuchtebeständigkeit beibehalten wird.

So kann erfindungsgemäß bevorzugt eine Beschichtungszusammensetzung oder wärmeempfindliche Aufzeichnungsschicht, wie hierzuvor definiert, sein, die ferner mindestens einen weiteren Farbentwickler der Formel (III) enthält,

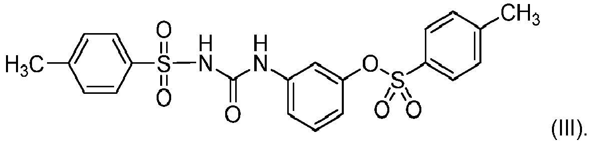

Bei der Verbindung mit der Formel (III) handelt es sich um die bereits bekannte Verbindung *N*-(4-Methylphenylsulfonyl)-*N*'-(3-(4-methylphenylsulfonyloxy)phenyl)harnstoff, die unter der Bezeichnung Pergafast® 201 vertrieben wird und beispielsweise in der EP 1140515 B1 beschrieben ist. Bei Pergafast® 201 handelt es sich um den am häufigsten verwendeten phenolfreien Farbentwickler. Der Zusatz von geringen Mengen der Verbindung der Formel (XVI) zu der erfindungsgemäßen Verbindung der Formel (I) oder der Formel (II) kann, sofern erforderlich oder gewünscht, die Beständigkeit gegenüber Fetten und Ölen verbessern.

Ebenfalls erfindungsgemäß bevorzugt ist in manchen Fällen eine Beschichtungszusammensetzung oder wärmeempfindliche Aufzeichnungsschicht nach einer der vorherigen beschriebenen und definierten Art, wobei der Anteil des Farbentwicklers oder eines Farbentwicklergemisches in der Beschichtungszusammensetzung oder wärmeempfindlichen Aufzeichnungsschicht beispielsweise wenigstens 10 Gew.-%, insbesondere wenigstens 15 oder 20 Gew.-%, und/oder bis zu maximal 65 Gew.-%, insbesondere bis zu maximal 60 Gew.-%, beträgt, und vorzugsweise 24 bis 60 Gew.-% beträgt, vorzugsweise 35 bis 58 Gew.-%, besonders bevorzugt 39 bis 56 Gew.-%, bezogen auf den gesamten Feststoffanteil der Beschichtungszusammensetzung oder wärmeempfindlichen Aufzeichnungsschicht.

Weiterhin erfindungsgemäß bevorzugt ist eine Beschichtungszusammensetzung oder wärmeempfindliche Aufzeichnungsschicht, wie hierzuvor definiert, zudem umfassend ein oder mehrere Bestandteile aus der Gruppe bestehend aus Sensibilisatoren, Pigmente, Dispergiermittel, Antioxidationsmittel, Trennmittel, Entschäumer, Lichtstabilisatoren, Lichtstabilisatoren und Aufheller.

Weiterhin erfindungsgemäß bevorzugt ist eine Beschichtungszusammensetzung oder wärmeempfindliche Aufzeichnungsschicht, die wie hierzuvor definiert, und unabhängig oder in Kombination mit einer vorstehenden Beschichtungszusammensetzung oder wärmeempfindliche Aufzeichnungsschicht, die zudem ein oder mehrere Bestandteile aus der Gruppe bestehend aus Sensibilisatoren, Pigmente, Dispergiermittel, Antioxidationsmittel, Trennmittel, Entschäumer, Lichtstabilisatoren und Aufheller umfasst, wobei die Beschichtungszusammensetzung oder wärmeempfindliche Aufzeichnungsschicht, einen Sensibilisator ausgewählt aus der Gruppebestehend aus Benzylnaphthylether (BNE), Diphenylsulfon (DPS), Ethylenglycol-m-tolyl-ether (EGTE), Ethylenglycol-phenoxyethan (EGPE), 1,2-Di(m-methylphenoxy)ethan (DMPE) und 1,2-Diphenoxyethan (DPE), oder eine Kombination davon umfasst.

Es kann erfindungsgemäß besonders bevorzugt sein, dass Pigmente regelmäßig in der Beschichtungszusammensetzung vorgesehen werden, um günstige Werte für die üblichen Papierparameter zu erhalten und sicherzustellen.

Erfindungsgemäß bevorzugt ist eine Beschichtungszusammensetzung oder ein wärmeempfindliches Aufzeichnungsmaterial, wobei das Trägersubstrat ein Papier, synthetisches Papier oder eine Kunststofffolie ist. Als Trägersubstrat ist ein nicht oberflächenbehandeltes Streichrohpapier besonders bevorzugt, da es eine gute Recyclingfähigkeit und eine gute Umweltverträglichkeit aufweist. Unter einem nicht oberflächenbehandelten Streichrohpapier ist ein Streichrohpapier zu verstehen, das nicht in einer Leimpresse oder in einer Beschichtungsvorrichtung behandelt wurde. Als Kunststofffolien sind Folien aus Polypropylen oder anderen Polyolefinen bevorzugt. Erfindungsgemäß bevorzugt sind auch Papiere, die mit einem oder mehreren Polyolefinen (insbesondere Polypropylen) beschichtet sind.

In einer Ausführungsvariante ist das Trägersubstrat ein Papier mit einem Anteil aus recycelten Fasern von mindestens 70 Gew.-%, bezogen auf den Gesamtfaserstoffanteil in dem Papier.

Erfindungsgemäß bevorzugt ist ein wärmeempfindliches Aufzeichnungsmaterial, zusätzlich enthaltend eine zwischen dem Trägersubstrat und der wärmeempfindlichen Aufzeichnungsschicht gelegene Zwischenschicht, wobei die Zwischenschicht vorzugsweise Pigmente enthält. Bei den Pigmenten kann es sich um organische Pigmente, anorganische Pigmente oder um eine Mischung aus organischen Pigmenten und anorganischen Pigmenten handeln.

Es ist erfindungsgemäß bevorzugt, wenn die flächenbezogene Masse der Zwischenschicht im Bereich von 5 bis 20 g/m², bevorzugt im Bereich von 7 bis 12 g/m² liegt.

Für den Fall, dass die Zwischenschicht Pigmente enthält, ist es in einer Ausgestaltung der Erfindung bevorzugt, wenn es sich bei den Pigmenten um organische Pigmente, vorzugsweise um organische Hohlkörperpigmente handelt.

Eigene Untersuchungen haben gezeigt, dass die Einbindung von organischen Pigmenten in die Zwischenschicht vorteilhaft ist, da organische Pigmente ein hohes Wärmereflexionsvermögen aufweisen. Durch eine gesteigerte Wärmereflexion der mit organischen Pigmenten ausgestalteten Zwischenschicht wird das Ansprechverhalten der wärmeempfindlichen Aufzeichnungsschicht gegenüber Wärme erhöht, da die eingestrahlte Wärme zumindest teilweise in die wärmeempfindliche Aufzeichnungsschicht reflektiert wird, statt sie an das Trägersubstrat zu leiten. Dadurch wird die Empfindlichkeit und das Auflösungsvermögen des wärmeempfindlichen Aufzeichnungsmaterials deutlich erhöht und ferner die Druckgeschwindigkeit im Thermodrucker gesteigert. Zudem kann der Energieverbrauch während des Druckvorgangs gesenkt werden, was insbesondere bei mobilen Geräten vorteilhaft ist. Hohlkörperpigmente weisen in ihrem Inneren Luft auf, wodurch sie üblicherweise eine noch höhere Wärmereflexion aufweisen und die Empfindlichkeit und das Auflösungsvermögen des wärmeempfindlichen Aufzeichnungsmaterials können noch weiter erhöht werden.

Für den Fall, dass die Zwischenschicht Pigmente enthält, ist es in einer alternativen Ausgestaltung der Erfindung bevorzugt, wenn es sich bei den Pigmenten um anorganische Pigmente handelt, vorzugsweise ausgewählt aus der Liste bestehend aus kalziniertem Kaolin, Siliziumoxid, Bentonit, Kalziumcarbonat, Aluminiumoxid und Böhmit.

Werden in die zwischen der Aufzeichnungsschicht und dem Substrat gelegene Zwischenschicht anorganische Pigmente eingebunden, können diese Pigmente die durch Hitzeeinwirkung des Thermokopfes verflüssigten Bestandteile (z.B. Wachse) der wärmeempfindlichen Aufzeichnungsschicht bei der Schriftbildausbildung aufnehmen und begünstigen damit eine noch sicherere und schnellere Funktionsweise der wärmeinduzierten Aufzeichnung.

Kalziniertes Kaolin hat sich aufgrund seines großen Absorptionsreservoirs in den Hohlräumen besonders bewährt. Auch Mischungen aus mehreren verschiedenartigen anorganischen Pigmenten sind vorstellbar.

Das Mengenverhältnis zwischen organischem und anorganischem Pigment ist eine Kombination der von den beiden Pigmentarten bewirkten Effekte, der besonders vorteilhaft gelöst wird, wenn die Pigmentmischung zu 5 bis 30 Gew.-% bzw. besser zu 8 bis 20 Gew.-% aus organischem und zu 95 bis 70 Gew.-% bzw. besser zu 92 bis 80 Gew.-% aus anorganischem Pigment besteht. Pigmentmischungen aus unterschiedlichen organischen Pigmenten und/oder anorganischen Pigmenten sind vorstellbar.

Erfindungsgemäß bevorzugt ist eine Beschichtungszusammensetzung oder ein wärmeempfindliches Aufzeichnungsmaterial, wobei die Zwischenschicht ggf. neben den anorganischen und/oder organischen Pigmenten, mindestens ein Bindemittel enthält, vorzugsweise auf Basis eines synthetischen Polymers, wobei Styrol-Butadien-Latex besonders gute Ergebnisse liefert. Die Verwendung eines synthetischen Bindemittels unter Beimischung mindestens eines natürlichen Polymers, wie besonders bevorzugt Stärke, stellt eine besonders geeignete Ausführungsform dar. Im Rahmen von Versuchen mit anorganischen Pigmenten wurde ferner festgestellt, dass ein Bindemittel-Pigment-Verhältnis innerhalb der Zwischenschicht zwischen 3:7 und 1:9, jeweils bezogen auf Gew.-% in der Zwischenschicht, eine besonders geeignete Ausführungsform darstellt.

Erfindungsgemäß bevorzugt ist eine Beschichtungszusammensetzung oder ein wärmeempfindliches Aufzeichnungsmaterial, wobei der Farbbildner ausgewählt ist aus Derivaten von Verbindungen aus der Gruppe bestehend aus Fluoran, Phthalid, Lactam, Triphenylmethan, Phenothiazin und Spiropyran.

Eigene Untersuchungen haben gezeigt, dass diese Farbbildner besonders gute Eigenschaften in Kombination mit dem erfindungsgemäß verwendeten Farbentwicklergemisch aufweisen.

Eine bevorzugte erfindungsgemäße Beschichtungszusammensetzung oder wärmeempfindliches Aufzeichnungsmaterial weist als Farbbildner vorzugsweise Verbindungen des Fluorantyps auf, ausgewählt aus der Gruppe bestehend aus 3-Diethylamino-6-methyl-7-anilinofluoran, 3-Diethylamino-6-methyl-7-(3'-methylphenylamino)fluoran (6'-(diethylamino)-3'-methyl-2'-(m-tolylamino)-3H-spiro[isobenzofuran-1,9'-xanthen]-3-one; ODB-7), 3-Di-n-pentyl-amino-6-methyl-7-anilinofluoran, 3-(Diethylamino)-6-Methyl-7-(3-Methyl-phenylamino)fluoran, 3-Di-n-butylamino-7-(2-chloranilino)fluoran, 3-Diethylamino-7-(2-chloranilino)fluoran, 3-Diethylamino-6-methyl-7-xylidinofluoran, 3-Diethylamino-7-(2-carbomethoxyphenylamino)fluoran, 3-Pyrrolidino-6-methyl-7-anilinofluoran, 3-Pyrrolidino-6-methyl-7-(4-n-butyl-phenylamino)fluoran, 3-Piperidino-6-methyl-7-anilinofluoran, 3-N-n-Dibutylamin-6-methyl-7-anilinofluoran (ODB-2), 3-(N-Methyl-N-cyclohexyl)amino-6-methyl-7-anilinofluoran, 3-(N-Methyl-N-propyl)amino-6-methyl-7-anilinofluoran, 3-(N-Methyl-N-tetrahydrofurfuryl)amino-6-methyl-7-anilinofluoran), 3-(N-Ethyl-N-isoamyl)-amino-6-methyl-7-anilinofluoran, 3-(N-Ethyl-N-tolyl)amino-6-methyl-7-anilinofluoran, 3-(N-Ethyl-N-tetrahydrofuryl)amino-6-methyl-7-anilinofluoran, 3-(N-Ethyl-N-isopentylamino)-6-methyl-7-anilinofluoran, 3-(N-Ethyl-4-toluidino)6-methyl-7-(4-toluidino)fluoran und 3-(N-Cyclopentyl-N-ethyl)amino-6-methyl-7-anilinofluoran.

Ebenfalls bevorzugt sind erfindungsgemäße Beschichtungszusammensetzungen oder wärmeempfindliche Aufzeichnungsmaterialien, die als Farbbildner die in den Absätzen [0049] bis [0052] der EP 2923851 A1 genannten Verbindungen enthalten.

Erfindungsgemäß besonders bevorzugt ist eine Beschichtungszusammensetzung oder ein wärmeempfindliches Aufzeichnungsmaterial, wobei der Farbbildner ausgewählt ist aus der Gruppe bestehend aus 3-N-Di-n-butylamin-6-methyl-7-anilinofluoran (ODB-2) und 3-(N-Ethyl-N-isopentylamino)-6-methyl-7-anilinofluoran.

Erfindungsgemäß bevorzugt ist eine Beschichtungszusammensetzung oder ein wärmeempfindliches Aufzeichnungsmaterial, wobei die Beschichtungszusammensetzung oder wärmeempfindliche Aufzeichnungsschicht einen Sensibilisator enthält.

Bei Verwendung eines Sensibilisators wird der Sensibilisator während der Zuführung von Wärme während des Druckvorgangs zuerst geschmolzen und der geschmolzene Sensibilisator löst die in der Beschichtungszusammensetzung oder wärmeempfindlichen Aufzeichnungsschicht nebeneinander vorliegenden Farbbildner und Farbentwickler und/oder senkt die Schmelztemperatur der Farbbildner und Farbentwickler, um eine Farbentwicklungsreaktion herbeizuführen. Der Sensibilisator nimmt an der Farbenwicklungsreaktion selbst nicht teil.

Unter einem Sensibilisator werden daher Substanzen verstanden, die zur Einstellung der Schmelztemperatur der Beschichtungszusammensetzung oder wärmeempfindlichen Aufzeichnungsschicht dienen und mit denen vorzugsweise eine Schmelztemperatur von ca. 70 bis 80 °C eingestellt werden kann, ohne dass die Sensibilisatoren selbst an der Farbenwicklungsreaktion beteiligt sind.

Erfindungsgemäß können als Sensibilisatoren beispielsweise Fettsäuresalze, Fettsäureester und Fettsäureamide (z.B. Zinkstearat, Stearinsäureamid, Palmitinsäureamid, Oleinsäureamid, Laurinsäureamid, Ethylen- und Methylenbisstearinsäureamid, Methylolstearinsäureamid), Naphthalinderivate, Biphenylderivate, Phtalate und Terephtalate eingesetzt werden.

Erfindungsgemäß besonders bevorzugt ist eine Beschichtungszusammensetzung oder ein wärmeempfindliches Aufzeichnungsmaterial, wobei der Sensibilisator ausgewählt ist aus der Gruppe bestehend aus 1,2-Bis(3-methylphenoxy)ethan (andere Bezeichnungen: 3,3'-(Ethylenebisoxy)bistoluene, 1,2-Bis(3-Methylphenyloxy)ethane (DMPE), Ethylene glycol M-tolyl ether (EGTE) [1,2-Di(m-methylphenoxy)ethan (DMPE, CAS®RN laut DB "Chemical Book" eine andere Bezeichnung für EGTE)], 1,1'-[1,2-ethanediylbis(oxy)]bis[3-methyl-benzen, CAS®RN 54914-85-1), 1,2-Diphenoxyethan (Diphenoxyethane (DPE, gegebenenfalls auch unter Kurzbezeichnung "EGPE"), CAS®RN 104-66-5), 2-(2H-Benzotriazol-2-yl)-p-cresol, 2,2'-Bis(4-methoxyphenoxy)diethylether, 4,4'-Diallyloxydiphenylsulfon, 4-Acetylacetophenon, 4-Benzybiphenyl, Acetoessigsäureanilide, Benzylnaphthylether (BNE, Benzyl-2-naphthylether), Benzyl-4-(benzyloxy)benzoat, Benzylparaben, Bis(4-chlorbenzyl)oxalatester, Bis(4-methoxyphenyl)ether, Dibenzyloxalat, Dibenzylterephthtalat, Dimethylterephtalat (DMT), Dimethylsulfon, Diphenyladipat, Diphenylsulfon, Ethylenglycol-m-tolyl-ether (EGTE), Ethylenbisstearinsäureamind, Fettsäureanilide, m-Terpenyl, N-Hydroxymethylstearinsäureamind, N-Methylolstearamid, N-Stearylharnstoff, N-Stearylstearinsäureamid, p-Benzylbiphenyl, Phenylbenzolsulfonatester, Salicylsäureanilid, Stearamid und α,α'-Diphenoxyxylen, wobei Benzylnaphthylether (BNE), Diphenylsulfon (DPS), Ethylenglycol-m-tolyl-ether (EGTE), 1,2-Di(m-methylphenoxy)ethan (DMPE) und 1,2-Diphenoxyethan (DPE) besonders bevorzugt sind.

Ebenfalls bevorzugt sind erfindungsgemäße Beschichtungszusammensetzungen oder wärmeempfindliche Aufzeichnungsmaterialien, die als Sensibilisator die in den Absätzen [0059] bis [0061] der EP 2923851 A1 genannten Verbindungen enthalten.

Entsprechend einer ersten bevorzugten Ausführung werden diese Sensibilisatoren jeweils allein, das bedeutet, nicht in Kombination mit den anderen genannten Sensibilisatoren aus der vorstehenden Liste, eingesetzt. Entsprechend einer zweiten, gleichsam bevorzugten Ausführung werden mindestens zwei Sensibilisatoren, ausgesucht aus der vorstehenden Liste, in die Beschichtungszusammensetzung oder wärmeempfindliche Aufzeichnungsschicht eingebunden.

Erfindungsgemäß bevorzugt ist eine Beschichtungszusammensetzung oder ein wärmeempfindliches Aufzeichnungsmaterial, wobei der Sensibilisator einen Schmelzpunkt von 60 °C bis 180 °C, bevorzugt einem Schmelzpunkt von 80 °C bis 140 °C aufweist.

Gewünschtenfalls bevorzugt sind Beschichtungszusammensetzungen oder wärmeempfindliche Aufzeichnungsmaterialien, wobei die wärmeempfindliche Aufzeichnungsschicht ein Bindemittel enthält, vorzugsweise ein vernetztes oder unvernetztes Bindemittel ausgewählt aus der Gruppe bestehend aus Polyvinylalkohol, carboxylgruppen-modifiziertem Polyvinylalkohol, Ethylen-Vinylalkohol-Copolymer, einer Kombination aus Polyvinylalkohol und Ethylen-Vinylalkohol-Copolymer, silanolgruppen-modifiziertem Polyvinylalkohol, diacetonmodifiziertem Polyvinylalkohol, Acrylat-Copolymer und filmbildenden Acrylcopolymeren.

Bevorzugt enthält die Beschichtungsmasse zur Ausbildung der wärmeempfindlichen Aufzeichnungsschicht des erfindungsgemäßen wärmeempfindlichen Aufzeichnungsmaterials, bzw. das erfindungsgemäße wärmeempfindliche Aufzeichnungsmaterial, neben einem oder mehreren Bindemitteln ein oder mehrere Vernetzungsmittel für das oder die Bindemittel. Bevorzugt ist das Vernetzungsmittel ausgewählt aus der Gruppe bestehend aus Zirconiumcarbonat, Polyamidaminepichlorhydrinharzen, Borsäure, Glyoxal, Dihydroxy bis(ammonium lactato)titanium(IV) (CAS®RN 65104-06-5; Tyzor LA) und Glyoxalderivaten.

Eine erfindungsgemäße Beschichtungszusammensetzung oder erfindungsgemäßes wärmeempfindliches Aufzeichnungsmaterial, dessen wärmeempfindliche Aufzeichnungsschicht aus einer solchen Beschichtungsmasse, enthaltend ein oder mehrere Bindemittel und ein oder mehrere Vernetzungsmittel für das oder die Bindemittel, gebildet ist, enthält in der wärmeempfindlichen Aufzeichnungsschicht ein oder mehrere durch Umsetzung mit einem oder mehreren Vernetzungsmitteln vernetzte Bindemittel, wobei das oder die Vernetzungsmittel ausgewählt sind aus der Gruppe bestehend aus Zirconiumcarbonat, Polyamidaminepichlorhydrinharzen, Borsäure, Glyoxal, Dihydroxy-bis(ammonium lactato)titanium(IV) (CAS®RN 65104-06-5; Tyzor LA) und Glyoxalderivaten. Unter "vernetztes Bindemittel" wird dabei das durch Umsetzung eines Bindemittels mit einem oder mehreren Vernetzungsmitteln gebildete Reaktionsprodukt verstanden.

Ebenfalls erfindungsgemäß bevorzugt ist in manchen Fällen eine Beschichtungszusammensetzung oder wärmeempfindliche Aufzeichnungsschicht nach einer der vorherigen beschriebenen und definierten Art, wobei der Anteil des Farbentwicklers oder eines Farbentwicklergemisches in der Beschichtungszusammensetzung oder wärmeempfindlichen Aufzeichnungsschicht beispielsweise wenigstens 10 Gew.-%, insbesondere wenigstens 15 oder 20 Gew.-%, und/oder bis zu maximal 65 Gew.-%, insbesondere bis zu maximal 60 Gew.-%, beträgt, und vorzugsweise 24 bis 60 Gew.-% beträgt, vorzugsweise 35 bis 58 Gew.-%, besonders bevorzugt 39 bis 56 Gew.-%, bezogen auf den gesamten Feststoffanteil der Beschichtungszusammensetzung oder wärmeempfindlichen Aufzeichnungsschicht.

Erfindungsgemäß bevorzugt ist eine Beschichtungszusammensetzung oder ein wärmeempfindliches Aufzeichnungsmaterial, wobei die flächenbezogene Masse der wärmeempfindlichen Aufzeichnungsschicht im Bereich von 1,5 bis 8 g/m² liegt, vorzugsweise im Bereich von 1,5 bis 6 g/m², weiter bevorzugt im Bereich von 2 bis 6 g/m², besonders bevorzugt im Bereich von 2,0 bis 5,5 g/m².

In erfindungsgemäßen Aufzeichnungsmaterialien können zusätzlich noch Bildstabilisatoren, Dispergiermittel, Antioxidationsmittel, Trennmittel, Entschäumer, Lichtstabilisatoren, Aufheller, wie sie im Stand der Technik bekannt sind, eingesetzt werden. Jede der Komponenten wird üblicherweise in einer Menge von 0,01 bis 15 Gew.-%, insbesondere - mit Ausnahme von Entschäumer - 0,1 bis 15 Gew.-%, vorzugsweise 1 bis 10 Gew.-% eingesetzt, bezogen auf den gesamten Feststoffanteil der wärmeempfindlichen Aufzeichnungsschicht. Bei Einsatz von Entschäumer in den diesbezüglichen Rezepturen kann in den erfindungsgemäßen Aufzeichnungsmaterialien der Entschäumer in Mengen von 0,03 bis 0,05 Gew.-% vorhanden sein, bezogen auf den gesamten Feststoffanteil der wärmeempfindlichen Aufzeichnungsschicht.

In einer Ausführungsform betrifft die Erfindung auch eine Streichfarbe zur Herstellung einer Beschichtungszusammensetzung oder einer wärmeempfindlichen Aufzeichnungsschicht, umfassend
- einen oder mehrere Farbstoffvorläufer; und
- einen oder mehrere Farbentwickler, wobei der eine oder zumindest einer der mehreren Farbentwickler eine Verbindung ist, wie erfindungsgemäß hierin definiert.

Der Begriff "Streichfarbe" bezeichnet hierbei einen in der Papierindustrie geläufigen Fachbegriff bei der Herstellung sogenannter "gestrichener" Papiere. Der Begriff "Streichfarbe" (auch Streichmasse) ist in der Papierindustrie geläufig und bezeichnet Anstrichmittel, enthaltend oder bestehend aus Pigmenten, Bindemittel und Additiven, die auf die Papieroberfläche mit speziellen Streichmaschinen zur Oberflächenveredelung des Papiers aufgetragen (gestrichen) werden. Diese Papiere werden als "gestrichene Papiere" bezeichnet und zeichnen sich durch eine bessere Bedruckbarkeit und Haptik aus.

Der Begriff "Streichfarbe" ist somit der Oberbegriff für alle streichfähigen Beschichtungsmassen, Zubereitungen und/oder Lösungen in der Papierindustrie. Daher ist der Vorstrich bzw. Zwischenstrich eine besondere Ausgestaltung einer Streichfarbe und zwar die jenige, welche zuerst auf das Papiersubstrat aufgebracht wird. Als nächste Schicht wird häufig eine Streichfarbe als Funktionsbeschichtung aufgebracht, beispielsweise um eine Thermofunktionalität oder eine Barrierefunktionalität zur Verfügung zu stellen. Als nächste Schicht kann optional eine Streichfarbe zur Ausbildung einer Schutzfunktion aufgebracht werden, beispielsweise eine Schutzschicht ("Topcoat"). Alternativ kann beispielsweise auf eine Thermoschicht eine silikonhaltige Streichfarbe zur Ausbildung einer Releaseschicht aufgebracht werde. Eine silikonhaltige Streichfarbe kann alternativ auch auf eine Schutzschicht aufgebracht werden. Auf die der silikonhaltigen Schicht gegenüberliegende Seite des Papiersubstrats wird häufig eine Klebstoff-haltige Streichfarbe aufgebracht. Vor der Klebstoff-haltigen Streichfarbe kann ebenfalls eine Streichfarbe als Vorstrich auf das Papiersubstrat aufgebracht werden.

Im Rahmen der vorliegenden Erfindung wird als eine erfindungsgemäße Streichfarbe eine solche verstanden, die als Funktionsbeschichtung auf ein Substrat, das gewünschtenfalls bereits einen oder mehrere Vorstriche aufweisen kann, aufgebracht werden kann, um auf dem Substrat eine Thermofunktionalität bereitzustellen, d.h. eine solche erfindungsgemäße Streichfarbe umfasst einen oder mehrere Farbstoffvorläufer; und einen oder mehrere Farbentwickler, wobei der eine oder zumindest einer der mehreren Farbentwickler eine Verbindung ist, wie erfindungsgemäß hierin definiert.

Zum Auftragen der Streichfarbe auf einem Trägersubstrat kennt der Fachmann verschiedene Techniken des Streichens, beispielsweise: Bladestreichen, Streichen mit Filmpresse, Gussstreichen, Vorhangstreichen (Curtain Coating), Sprühstreichen.

In einer weiteren Ausführungsform betrifft die Erfindung ein wärmeempfindliches Aufzeichnungsmaterial, umfassend
- ein Trägersubstrat,
und
- eine wärmeempfindliche Aufzeichnungsschicht, wie erfindungsgemäß hierin definiert.

Erfindungsgemäß bevorzugt ist ein vorstehendes wärmeempfindliches Aufzeichnungsmaterial, zusätzlich enthaltend eine zwischen dem Trägersubstrat und der wärmeempfindlichen Aufzeichnungsschicht gelegene Zwischenschicht, wobei die Zwischenschicht vorzugsweise Pigmente enthält. Weiter bevorzugt ist hierbei ein erfindungsgemäßes wärmeempfindliches Aufzeichnungsmaterial, wobei es sich bei den Pigmenten um
a) organische Pigmente, vorzugsweise um organische Hohlkörperpigmente handelt
und/oder
b) anorganische Pigmente handelt, vorzugsweise ausgewählt aus der Liste bestehend aus kalziniertem Kaolin, Siliziumoxid, Bentonit, Kalziumkarbonat, Aluminiumoxid und Böhmit.

In einer Ausgestaltung der erfindungsgemäßen wärmeempfindlichen Aufzeichnungsmaterialien ist die wärmeempfindliche Aufzeichnungsschicht vollständig oder teilweise mit einer Schutzschicht bedeckt ist. Durch die Anordnung einer die wärmeempfindliche Aufzeichnungsschicht abdeckenden Schutzschicht ist die wärmeempfindliche Aufzeichnungsschicht auch nach außen bzw. zum Trägersubstrat der nächsten Lage innerhalb einer Rolle abgeschirmt, sodass sie ein Schutz vor äußeren Einflüssen erfolgt.

Eine derartige Schutzschicht hat in solchen Fällen neben dem Schutz der unter der Schutzschicht angeordneten wärmeempfindlichen Aufzeichnungsschicht vor Umwelteinflüssen häufig den zusätzlichen positiven Effekt, die Bedruckbarkeit des erfindungsgemäßen wärmeempfindlichen Aufzeichnungsmaterials insbesondere im Indigo-. Offset- und Flexodruck zu verbessern. Aus diesem Grund kann es für bestimmte Anwendungsfälle erwünscht sein, dass das erfindungsgemäße wärmeempfindliche Aufzeichnungsmaterial eine Schutzschicht aufweist, obwohl durch die Präsenz eines Farbentwicklergemisches wie oben definiert in der wärmeempfindlichen Aufzeichnungsschicht des erfindungsgemäßen wärmeempfindlichen Aufzeichnungsmaterials die Beständigkeit eines auf einem erfindungsgemäßen wärmeempfindlichen Aufzeichnungsmaterial erhältlichen Thermoausdrucks gegenüber Stoffen ausgewählt aus der Gruppe bestehend aus Wasser, Alkoholen, Fetten, Ölen und deren Mischungen auch ohne Schutzschicht bereits ausreichend ist.

Bevorzugt enthält die Schutzschicht des erfindungsgemäßen wärmeempfindlichen Aufzeichnungsmaterials ein oder mehrere vernetzte oder unvernetzte Bindemittel ausgewählt aus der Gruppe bestehend aus mit Carboxylgruppen modifizierten Polyvinylalkoholen, mit Silanolgruppen modifizierten Polyvinylalkoholen, Diacetonmodifizierten Polyvinylalkoholen, acetoacetyl-modifizierten Polyvinylalkohol, teil- und vollverseiften Polyvinylalkoholen und filmbildenden Acrylcopolymeren.

Bevorzugt, sofern vorhanden, enthält die Beschichtungsmasse zur Ausbildung der Schutzschicht des erfindungsgemäßen wärmeempfindlichen Aufzeichnungsmaterials neben einem oder mehreren Bindemitteln ein oder mehrere Vernetzungsmittel für das oder die Bindemittel. Bevorzugt ist das Vernetzungsmittel dann ausgewählt aus der Gruppe bestehend aus Borsäure, Polyaminen, Epoxyharzen, Dialdehyden, Formaldehydoligomeren, Epichlorhydrinharzen, Adipinsäuredihydrazid, Melaminformaldehyd, Harnstoff, Methylolharnstoff, Ammoniumzirconiumcarbonat, Natrium/Calciumglyoxylat, Polyamidepichlorhydrinharzen und Tyzor LA.

Ein erfindungsgemäßes wärmeempfindliches Aufzeichnungsmaterial, dessen Schutzschicht aus einer solchen Beschichtungsmasse enthaltend ein oder mehrere Bindemittel und ein oder mehrere Vernetzungsmittel für das oder die Bindemittel gebildet ist, enthält in der Schutzschicht ein oder mehrere durch Umsetzung mit einem oder mehreren Vernetzungsmitteln vernetzte Bindemittel, wobei das oder die Vernetzungsmittel ausgewählt sind aus der Gruppe bestehend aus Borsäure, Polyaminen, Epoxyharzen, Dialdehyden, Formaldehydoligomeren, Epichlorhydrinharzen, Adipinsäuredihydrazid Melaminformaldehyd, Harnstoff, Methylolharnstoff, Ammoniumzirconiumcarbonat und Polyamidepichlorhydrinharzen. Unter "vernetztes Bindemittel" wird dabei das durch Umsetzung eines Bindemittels mit einem oder mehreren Vernetzungsmitteln gebildete Reaktionsprodukt verstanden.

In einer ersten Ausführungsvariante ist die die wärmeempfindliche Aufzeichnungsschicht ganz oder teilweise abdeckende Schutzschicht erhältlich aus einer Beschichtungsmasse umfassend einen oder mehrere Polyvinylalkohole und ein oder mehrere Vemetzungsmittel. Es ist bevorzugt, dass der Polyvinylalkohol der Schutzschicht mit Carboxyl- oder insbesondere Silanolgruppen modifiziert ist. Auch Mischungen verschiedener Carboxylgruppen- oder Silanol-modifizierter Polyvinylalkohole sind bevorzugt einsetzbar. Eine solche Schutzschicht besitzt eine hohe Affinität gegenüber der im Offset-Druckprozess eingesetzten, bevorzugt UV-vernetzenden Druckfarbe (UV steht für: Ultraviolettstrahlung). Dies unterstützt entscheidend dabei, die Forderung nach einer hervorragenden Bedruckbarkeit innerhalb des Offset-Drucks zu erfüllen.

Das oder die Vernetzungsmittel für die Schutzschicht gemäß dieser Ausführungsvariante sind vorzugsweise ausgewählt aus der Gruppe bestehend aus Borsäure, Polyaminen, Epoxyharzen, Dialdehyden, Formaldehydoligomeren, Polyaminepichlorhydrinharz, Adipinsäuredihydrazid, Melaminformaldehyd und Tyzor LA. Auch Mischungen verschiedener Vernetzungsmittel sind möglich.

Bevorzugt liegt in der Beschichtungsmasse zur Ausbildung der Schutzschicht gemäß dieser Ausführungsvariante das Gewichtsverhältnis des modifizierten Polyvinylalkohols zu dem Vernetzungsmittel in einem Bereich von 20 : 1 bis 5 : 1 und besonders bevorzugt in einem Bereich von 12 : 1 bis 7 : 1. Besonders bevorzugt ist ein Verhältnis des modifizierten Polyvinylalkohols zum Vernetzungsmittel im Bereich von 100 Gewichtsteilen zu 8 bis 11 Gewichtsteilen.

Besonders gute Ergebnisse wurden erzielt, wenn die Schutzschicht gemäß dieser Ausführungsvariante zusätzlich ein anorganisches Pigment enthält. Dabei ist das anorganische Pigment vorzugsweise ausgewählt aus der Gruppe bestehend aus Siliziumdioxid, Bentonit, Aluminiumhydroxid, Kalziumcarbonat, Kaolin und Mischungen aus den genannten anorganischen Pigmenten.

Es ist bevorzugt, die Schutzschicht gemäß dieser Ausführungsvariante mit einer flächenbezogenen Masse in einem Bereich von 1,0 g/m² bis 6 g/m² und besonders bevorzugt von 1,2 g/m² bis 3,8 g/m² aufzutragen. Dabei wird die Schutzschicht bevorzugt einlagig ausgebildet.

In einer zweiten Ausführungsvariante umfasst die Beschichtungsmasse zur Ausbildung der Schutzschicht ein wasserunlösliches, selbstvernetzendes Acrylpolymer als Bindemittel, ein Vernetzungsmittel und einen Pigmentbestandteil, wobei der Pigmentbestandteil der Schutzschicht aus einem oder mehreren anorganischen Pigmenten besteht und mindestens 80 Gew.-% aus einem hoch gereinigten alkalisch aufbereiteten Bentonit gebildet sind, das Bindemittel der Schutzschicht aus einem oder aus mehreren wasserunlöslichen, selbstvernetzenden Acrylpolymeren besteht und das Bindemittel-/Pigmentverhältnis in einem Bereich von 7 : 1 bis 9 : 1 liegt.

Ein selbstvernetzendes Acrylpolymer innerhalb der Schutzschicht gemäß der hier beschriebenen zweiten Ausführungsvariante ist vorzugsweise ausgewählt aus der Gruppe bestehend aus Styrol-Acrylsäureester-Copolymerisaten, Acrylamidgruppen enthaltenden Copolymerisaten aus Styrol und Acrylsäureester sowie Copolymeren auf Basis von Acrylnitril, Methacrylamid und Acrylester. Letztere sind bevorzugt. Als Pigment kann alkalisch aufbereiteter Bentonit, natürliches oder gefälltes Kalziumkarbonat, Kaolin, Kieselsäure oder Aluminiumhydroxid in die Schutzschicht eingebunden sein. Bevorzugte Vernetzungsmittel sind ausgewählt aus der Gruppe bestehend aus zyklischem Harnstoff, Methylolharnstoff, Ammoniumzirconiumcarbonat und Polyamidepichlorhydrinharzen.

Durch die Wahl eines wasserunlöslichen, selbstvernetzenden Acrylpolymers als Bindemittel und dessen Gewichtsverhältnis (i) zum Pigment in einem Bereich von 7 : 1 bis 9: 1 sowie (ii) zum Vernetzungsmittel größer als 5 : 1 ist schon bei einer Schutzschicht mit relativ geringer flächenbezogener Masse eine hohe Umweltresistenz des erfindungsgemäßen wärmeempfindlichen Aufzeichnungsmaterials gegeben. Solche Gewichtsverhältnisse sind somit bevorzugt.

Die Schutzschicht selbst kann unter Einsatz üblicher Streichwerke aufgetragen werden, wofür unter anderem eine Streichfarbe nutzbar ist, bevorzugt mit einer flächenbezogene Masse in einem Bereich von 1,0 bis 4,5 g/m². In einer alternativen Variante ist die Schutzschicht aufgedruckt. Verarbeitungstechnisch und hinsichtlich ihrer technologischen Eigenschaften besonders geeignet, sind solche Schutzschichten, die durch Einwirkung aktinischer Strahlung härtbar sind. Unter dem Begriff "aktinische Strahlung" sind UV- oder ionisierende Strahlungen, wie Elektronenstrahlen, zu verstehen. Unter Aktinität wird die die photochemische Wirksamkeit von elektromagnetischer Strahlung unterschiedlicher Wellenlänge verstanden.

Das Erscheinungsbild der Schutzschicht wird maßgeblich durch die Art der Glättung und der die Friktion im Glättwerk und Kalander beeinflussenden Walzenoberflächen und deren Materialien bestimmt. Insbesondere wegen bestehender Marktanforderungen wird eine Rauhigkeit (Parker Print Surf Rauhigkeit) der Schutzschicht von kleiner als 1,5 µm (bestimmt entsprechend der DIN ISO 8791-4:2008-05 Papier, Pappe und Karton - Bestimmung der Rauheit/Glätte (Luftstromverfahren) - Teil 4: Print-Surf-Verfahren (ISO 8791-4:2007)) als bevorzugt angesehen. Besonders bewährt hat sich im Rahmen der dieser Erfindung vorausgegangenen Versuchsarbeiten die Verwendung von Glättwerken, bei denen NipcoFlex™- oder zonengeregelte Nipco-P™-Walzen zum Einsatz kommen; die Erfindung ist jedoch hierauf nicht beschränkt.

Ein weiterer Aspekt der vorliegenden Erfindung betrifft eine Verwendung eines erfindungsgemäßen wärmeempfindlichen Aufzeichnungsmaterials als Lottoscheine, TITO-Tickets (Ticket-in, Ticket-out), Fahrscheine, Eintrittskarten, Flug-, Bahn-, Schiff- oder Busticket, Glücksspielbeleg, Parkticket, Etikett, Kassenbon, Bankauszüge, Selbstklebeetikett, medizinisches und/oder technisches Diagrammpapier, Faxpapier, Sicherheitspapier oder Barcode-Etiketten.

Ein weiter Aspekt der vorliegenden Erfindung betrifft Produkte, vorzugsweise Lottoscheine, TITO-Tickets (Ticket-in, Ticket-out), Fahrscheine, Eintrittskarten, Flug-, Bahn-, Schiff- oder Busticket, Glücksspielbeleg, Parkticket, Etikett, Kassenbon, Bankauszüge, Selbstklebeetikett, medizinisches Diagrammpapier, Faxpapier, Sicherheitspapier oder Barcode-Etiketten, umfassend ein erfindungsgemäßes wärmeempfindliches Aufzeichnungsmaterial.

Ticket-in, Ticket-out (TITO) ist eine Technologie, welche beispielsweise in moderneren Spielautomaten eingesetzt wird. Ein TITO-Automat druckt ein TITO-Ticket (Barcode-Ticket) aus, welches entweder gegen Bargeld eingetauscht oder in andere TITO-Automaten eingeführt werden kann. TITO-Automaten verfügen über eine Netzwerkschnittstelle zur Kommunikation mit einem zentralen System, welches die Guthaben der TITO-Tickets Barcode-Tickets nachverfolgt. Diese Technologie ist überall dort einsetzbar, wo veränderbare Guthaben erforderlich sind, jedoch kein Bargeld eingesetzt werden soll, beispielsweise in Kantinen, Mensen, Freizeitparks, Schwimmbädern und/oder Saunen.

Ein weiterer Aspekt der vorliegenden Erfindung betrifft ein Verfahren zur Herstellung eines wärmeempfindlichen Aufzeichnungsmaterials oder einer wärmeempfindlichen Aufzeichnungsschicht, wie jeweils hierin definiert, umfassend die folgenden Verfahrensschritte:
i. Bereitstellen oder Herstellen eines Trägersubstrates; sowie Bereitstellen oder Herstellen einer Beschichtungszusammensetzung, wie diese hierin erfindungsgemäß beschrieben und definiert ist, oder einer Streichfarbe, wie diese hierin erfindungsgemäß beschrieben und definiert ist, umfassend eine Verbindung der Formel (I) wie in einem erfindungsgemäßen wärmeempfindlichen Aufzeichnungsmaterial eingesetzt;
ii. Aufbringen der bereitgestellten oder hergestellten Beschichtungszusammensetzung auf das bereitgestellte oder hergestellte Trägersubstrat oder auf eine darauf angeordnete Zwischenschicht;
iii. Trocknen der aufgebrachten Beschichtungszusammensetzung, so dass eine wärmeempfindliche Aufzeichnungsschicht resultiert, die gemeinsam mit dem Trägersubstrat in einem wärmeempfindlichen Aufzeichnungsmaterial vorliegt;
iv. vorzugsweise ein vorstehendes Verfahren umfassend die Schritte i. bis iii. zur Herstellung eines wärmeempfindlichen Aufzeichnungsmaterials oder zur Herstellung einer wärmeempfindlichen Aufzeichnungsschicht, ferner umfassend den Verfahrensschritt des Aufbringens einer die wärmeempfindliche Aufzeichnungsschicht vollständig oder teilweise bedeckenden Schutzschicht und Trocknen der Schutzschicht, so dass eine wärmeempfindliche Aufzeichnungsschicht resultiert, die gemeinsam mit dem Trägersubstrat in einem wärmeempfindlichen Aufzeichnungsmaterial vorliegt und vollständig oder teilweise mit der Schutzschicht bedeckt ist.

Erfindungsgemäß bevorzugt ist ein Verfahren zusätzlich umfassend die Verfahrensschritte
a) Bereitstellen oder Herstellen einer Beschichtungszusammensetzung oder Streichfarbe umfassend Pigmente;
b) Aufbringen der bereitgestellten oder hergestellten Beschichtungszusammensetzung oder Streichfarbe auf dem Trägersubstrat;
c) Trocknen der aufgebrachten Beschichtungszusammensetzung oder Streichfarbe unter Ausbildung einer Zwischenschicht;
wobei die Verfahrensschritte a) bis c) vor dem Verfahrensschritt ii. durchgeführt werden und die Zwischenschicht zwischen dem Trägersubstrat und der wärmeempfindlichen Aufzeichnungsschicht angeordnet ist. Sofern eine Zwischenschicht ausgebildet wird, erfolgt das Aufbringen der bereitgestellten oder hergestellten Beschichtungszusammensetzung in Schritt iii. des erfindungsgemäßen Verfahrens auf die ausgebildete Zwischenschicht und nicht direkt auf das bereitgestellte oder hergestellte Trägersubstrat.

Erfindungsgemäß ebenfalls bevorzugt ist ein Verfahren zusätzlich umfassend die Verfahrensschritte
A) Bereitstellen oder Herstellen einer Beschichtungszusammensetzung;
B) Aufbringen der bereitgestellten oder hergestellten Beschichtungszusammensetzung auf der wärmeempfindlichen Aufzeichnungsschicht;
C) Trocknen der aufgebrachten Beschichtungszusammensetzung unter Ausbildung einer Schutzschicht;
wobei die Verfahrensschritte A) bis C) nach dem Verfahrensschritt iv. durchgeführt werden und die Schutzschicht auf der wärmeempfindlichen Aufzeichnungsschicht angeordnet ist.

Erfindungsgemäß bevorzugt kann ein Verfahren sein, zur Herstellung eines erfindungsgemäßen wärmeempfindlichen Aufzeichnungsmaterials oder einer erfindungsgemäßen wärmeempfindlichen Aufzeichnungsschicht, das ferner den Verfahrensschritt des Aufbringens einer die wärmeempfindliche Aufzeichnungsschicht vollständig oder teilweise bedeckenden Schutzschicht und Trocknen der Schutzschicht umfasst, so dass eine wärmeempfindliche Aufzeichnungsschicht resultiert, die gemeinsam mit dem Trägersubstrat in einem wärmeempfindlichen Aufzeichnungsmaterial vorliegt und vollständig oder teilweise mit der Schutzschicht bedeckt ist.

Die Erfindung betrifft weiterhin eine Verbindung, vorzugsweise zur Verwendung als Farbentwickler in einer Beschichtungszusammensetzung zur Herstellung eines wärmeempfindlichen Aufzeichnungsmaterials oder als Farbentwickler in einer wärmeempfindlichen Aufzeichnungsschicht oder als Farbentwickler in einer Streichfarbe zur Herstellung einer Beschichtungszusammensetzung oder einer wärmeempfindlichen Aufzeichnungsschicht, wobei die Verbindung umfasst:
a) mindestens eine strukturelle Einheit der Milchsäure
und
b) unabhängig voneinander zwei endständige Elektronenakzeptorgruppen für den Farbentwickler enthält,
wobei die Verbindung eine Verbindung der Formel (I) ist, wie diese oben erfindungsgemäß bzw. in Anspruch 1 angegeben und definiert ist.

Erfindungsgemäß ist hierbei die Verbindung vorzugsweise eine Verbindung der Formel (I), wie diese oben erfindungsgemäß bzw. in Anspruch 1 angegeben und definiert, ist, die eine strukturelle Einheit der Formel (Ic) enthält, wie diese oben erfindungsgemäß bzw.. in Anspruch 2 angegeben und definiert ist;

Erfindungsgemäß ist hierbei die Verbindung weiter bevorzugt eine Verbindung der Formel (I), wie diese oben erfindungsgemäß bzw. in Anspruch 1 angegeben und definiert, die unabhängig voneinander zwei endständige Elektronenakzeptorgruppen mit der strukturellen Einheit der Formel (Ib), wie diese oben erfindungsgemäß bzw. in Anspruch 1 angegeben und definiert ist, umfasst; und wobei in der Verbindung der Formel (I) auch eine strukturelle Einheit der Formel (Ic), wie diese oben erfindungsgemäß bzw. in Anspruch 2 angegeben und definiert ist, vorliegt;

Erfindungsgemäß ist hierbei die Verbindung noch weiter bevorzugt eine Verbindung, in der mindestens eine strukturelle Einheit der Formel (lila) und/oder der Formel (IIIb) der Milchsäure bzw. deren Lactid in der Verbindung der Formel (I), wie diese oben erfindungsgemäß bzw. in Anspruch 1 angegeben und definiert, vorliegt, 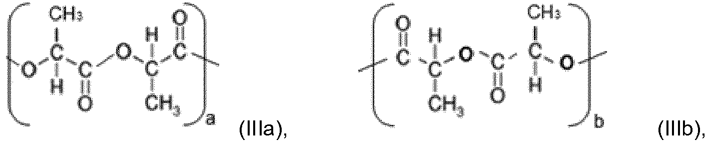 wobei unabhängig voneinander a und b eine ganze Zahl von 1 bis 10, vorzugsweise von 1 bis 6, weiter bevorzugt von 1 bis 3, ganz bevorzugt 2, sind;

Erfindungsgemäß ist hierbei die Verbindung besonders bevorzugt eine Verbindung der Formel (I) ist, wie diese oben erfindungsgemäß bzw. in Anspruch 1 angegeben und definiert ist, wobei die Verbindung eine oder zwei endständige strukturelle Einheiten der Formel (Ib), vorzugsweise zwei endständige strukturelle Einheiten der Formel (Ib) aufweist,

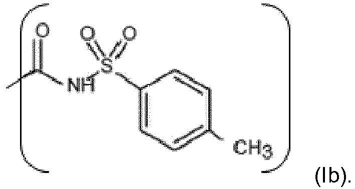

In der vorstehend beschriebenen und definierten erfindungsgemäßen Verbindung oder Mischungen davon oder als eine Mischung mit mindestens einer weiteren Verbindung der Formel (XIV), können die Partikelgrößen der einen oder zumindest einer der Verbindungen bei Vorliegen von mehreren Verbindungen, wie hierzuvor definiert, gemessen durch Laserbeugung, des einen oder zumindest eines der mehreren Verbindungen, jeweils unabhängig voneinander, im Bereich von 0,5 bis 10 µm liegen, vorzugsweise im Bereich von 0,8 bis 8 µm, weiter bevorzugt im Bereich von 0,8 bis 4 µm. Erfindungsgemäß bevorzugt ist in manchen Fällen eine Verbindung oder Mischungen davon oder als eine Mischung mit mindestens einer weiteren Verbindung der Formel (XIV), wie hierzuvor definiert, wobei die Partikelgrößen, gemessen als X₅₀-Wert durch Laserbeugung, des einen oder zumindest eines der mehreren Verbindungen, jeweils unabhängig voneinander, im Bereich von 0,8 bis 2 µm, vorzugsweise im Bereich von 0,85 bis 1,7 µm, und besonders bevorzugt im Bereich von 0,85 bis 1,65 µm, liegen. Die Bestimmung der Partikelgrößen kann durch Laserbeugung (HELOS-Partikelgrößenanalyse) gemessen werden. Im Rahmen der Erfindung wurde ein Gerät der Sympatec GmbH, Helos (H1453) & Quixel, R1, eingesetzt (Auswertung WINDOX 4).

Die Erfindung betrifft ferner die Verwendung einer Verbindung wie hierzuvor definiert,
i. als Farbentwickler, wie unter A) bis D) angegeben, und/oder
ii. zur Herstellung eines Farbentwicklers, wie unter A) bis D) angegeben, und/oder
iii. als Farbentwickler zur Herstellung, wie unter A) bis D) angegeben,
wobei der für Farbentwickler geeignet und/oder vorgesehen ist für, und/oder zur Herstellung dient für
A) eine Beschichtungszusammensetzung zur Herstellung eines wärmeempfindlichen Aufzeichnungsmaterials; oder
B) eine wärmeempfindliche Aufzeichnungsschicht; oder
C) eine Streichfarbe zur Herstellung einer Beschichtungszusammensetzung zur Herstellung eines wärmeempfindlichen Aufzeichnungsmaterials oder wärmeempfindliche Aufzeichnungsschicht; oder
D) ein wärmeempfindliches Aufzeichnungsmaterial.

Schließlich betrifft die Erfindung auch ein Verfahren zur Herstellung einer erfindungsgemäßen Verbindung wie diese hierzuvor beschrieben und definiert ist, vorzugsweise einer Verbindung zur Verwendung als Farbentwickler in einer Beschichtungszusammensetzung zur Herstellung eines wärmeempfindlichen Aufzeichnungsmaterials oder als Farbentwickler in einer wärmeempfindlichen Aufzeichnungsschicht oder als Farbentwickler in einer Streichfarbe zur Herstellung einer Beschichtungszusammensetzung oder einer wärmeempfindlichen Aufzeichnungsschicht, wobei das Verfahren die Umsetzung umfasst, von
(i) einer Verbindung (d.h. mit einem cyclischen Ester einer Hydroxycarbonsäure, Lactid) der Formel (IV), 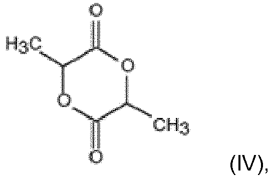 unter Ringöffnung des Lactids der Formel (IV), vorzugsweise in Gegenwart eines Katalysators, und gewünschtenfalls Polymerisation der durch Ringöffnung des Lactids der Formel (IV) erhaltenen Zwischenverbindung zu einer oder mehreren Verbindungen, umfassend mindestens eine strukturelle Einheit der Formel (lila) und/oder der Formel (IIIb) der Milchsäure bzw. deren Lactid, 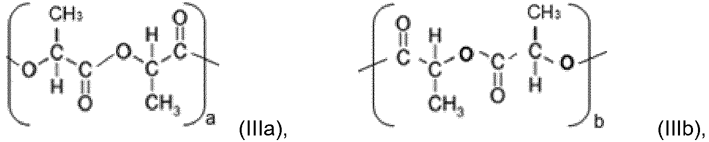 wobei unabhängig voneinander a und b eine ganze Zahl von 1 bis 10, vorzugsweise von 1 bis 6, weiter bevorzugt von 1 bis 3, ganz bevorzugt 2, sind,
(ii) einer Verbindung der Formel (V), 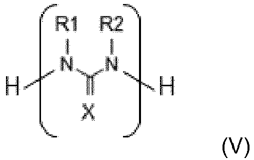 wobei X für O, S oder NH steht und R1 und R2 unabhängig voneinander für ein Wasserstoffatom, eine Methylgruppe, vorzugsweise für ein Wasserstoffatom, stehen;
wobei vorzugsweise die Umsetzung unter Bedingungen erfolgt, bei denen sich die Verbindung der Formel (V) nicht oder zumindest teilweise nicht zersetzt, vorzugsweise unter Bedingungen, wobei die Temperatur bei der Umsetzung mindestens 1 °C, vorzugsweise mindestens 2 °C oder 3 °C oder 4 °C oder 5 °C niedriger, weiter bevorzugt mindestens 5 °C bis 10 °C niedriger, als die Zersetzungstemperatur einer Verbindung der Formel (V) erfolgt;
und
(iii) des durch Umsetzung der Verbindungen der Formel (IV) und der Formel (V), mit oder ohne vorhergehende Aufreinigung und/oder mit oder ohne vorhergehende Isolierung, erhaltenen Zwischenproduktes mit einer Verbindung der Formel (VIa) und/oder einer Verbindung der Formel (VIb), 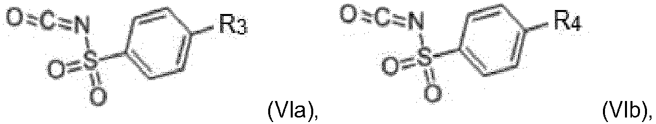 wobei R3 und R4 unabhängig voneinander für ein Wasserstoffatom, eine C1-C6-Alkylgruppe, eine C1-C6-Alkoxygruppe oder eine Halogengruppe, vorzugsweise für ein Wasserstoffatomoder eine Methylgruppe, weiter bevorzugt für eine Methylgruppe, besonders bevorzugt ein p-Toluolsulfonylisocyanat der Formel (VII) als Vorläuferverbindung einer Elektronenakzeptorgruppe, 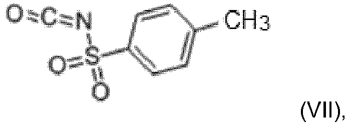 stehen,
und eine Verbindung der Formel (I), wie diese im Anspruch 1 angegeben und definiert ist, gewonnen wird.

Erfindungsgemäß ist weiterhin ein Verfahren, wie vorstehend angegeben, zur Herstellung einer erfindungsgemäßen Verbindung, vorzugsweise einer Verbindung zur Verwendung als Farbentwickler in einer Beschichtungszusammensetzung zur Herstellung eines wärmeempfindlichen Aufzeichnungsmaterials oder als Farbentwickler in einer wärmeempfindlichen Aufzeichnungsschicht oder als Farbentwickler in einer Streichfarbe zur Herstellung einer Beschichtungszusammensetzung oder einer wärmeempfindlichen Aufzeichnungsschicht, wobei das Verfahren die Umsetzung umfasst, von
(i) einer Verbindung (d.h. mit einem cyclischen Ester einer Hydroxycarbonsäure, einem Lactid) der Formel (IV) 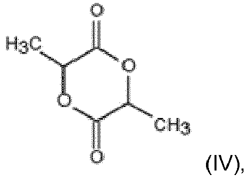 unter Ringöffnung des Lactids der Formel (IV), vorzugsweise in Gegenwart eines Katalysators, und gewünschtenfalls Polymerisation der durch Ringöffnung des Lactids der Formel (IV) erhaltenen Zwischenverbindung zu einer oder mehreren Verbindungen, umfassend mindestens eine strukturelle Einheit der Formel (lila) und/oder der Formel (IIIb) der Milchsäure bzw. deren Lactid, 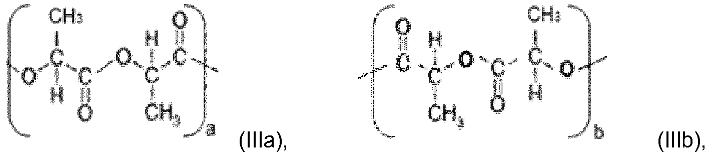 wobei unabhängig voneinander a und b eine ganze Zahl von 1 bis 10, vorzugsweise von 1 bis 6, weiter bevorzugt von 1 bis 3, ganz bevorzugt 2, sind,
und
(ii) wenigstens einer Vorläuferverbindung einer Elektronenakzeptorgruppe wie diese in Anspruch 3 definiert ist, vorzugsweise wenigstens eine Verbindung der Formel (VIa) und/oder der Formel (VIb), 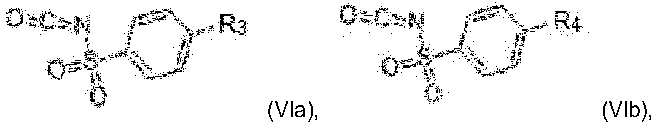 wobei R3 und R4 unabhängig voneinander für ein Wasserstoffatom, eine C1-C6-Alkylgruppe, eine C1-C6-Alkoxygruppe oder eine Halogengruppe, vorzugsweise für ein Wasserstoffatomoder eine Methylgruppe, weiter bevorzugt für eine Methylgruppe, besonders bevorzugt ein p-Toluolsulfonylisocyanat der Formel (VII) als Vorläuferverbindung einer Elektronenakzeptorgruppe, 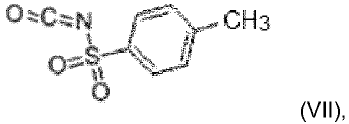 stehen,
und
(iii) des durch Umsetzung der Verbindungen der Formel (IV) und der Formel (VI), mit oder ohne vorhergehende Aufreinigung und/oder mit oder ohne vorhergehende Isolierung, erhaltenen Zwischenproduktes mit einer Verbindung der Formel (V), 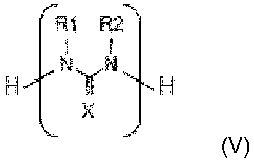 wobei X für O, S oder NH steht und R1 und R2 unabhängig voneinander für ein Wasserstoffatom, eine Methylgruppe, vorzugsweise für ein Wasserstoffatom, stehen,
   und eine Verbindung der Formel (I), wie diese im Anspruch 1 angegeben und definiert ist, gewonnen wird.

Ein erfindungsgemäßes Beispiel einer Verbindung der Formel (I) kann durch eine Verbindung der folgenden Formel (I-A) illustriert werden:

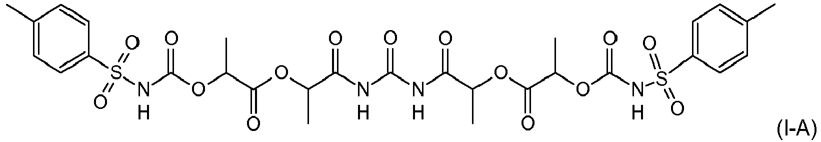

Die Verbindung der Formel (I-A) ist symmetrisch und enthält eine zentrale strukturelle Harnstoff-Einheit, an die über jedes Stickstoffatom jeweils eine strukturelle Lactid-Einheit gebunden ist, die Verbindung der Formel (I-A) also insgesamt zwei strukturelle Lactid-Einheiten enthält, und wobei über endständig an den strukturelle Lactid-Einheiten jeweils als eine Elektronenakzeptorgruppe ein p-Toluolsulfonylamidcarbonyl-Rest gebunden ist.

Die nachfolgenden Beispiele und Vergleichsbeispiele werden die Erfindung weiter verdeutlichen.

Für den Fachmann ist es bei Betrachtung der Beschreibung offensichtlich, dass verschiedene Modifikationen in den offenbarten Ausführungsformen vorgenommen werden können, ohne vom Umfang der Erfindung abzuweichen. Es ist daher beabsichtigt, dass die Ausführungsformen und Beispiele nur als illustrativ angesehen werden.

### Beispiel 1

Die vorliegende Erfindung ist im folgenden Beispiel weiter definiert. Dieses Beispiel, das eine Ausführungsform der Erfindung angibt, ist nur zur Veranschaulichung dargestellt.

Materialien: Harnstoff; Puralact B3: kommerziell erhältlich von Corbion Purac B.V.; Methylethylketon (MEK); p-Toluolsulfonylisocyanat.

Harnstoff und Puralact B3 wurden unter Stickstoffatmosphäre in ein Reaktionsgefäß gegeben. Das Gefäß wurde auf 150 °C erhitzt und 100 ppm Zinnoctoat-Katalysator wurden dazugegeben. Die Temperatur des Gefäßes wurde dann auf 180 °C erhöht und die Reaktion etwa 6 Stunden fortgesetzt. Das Gefäß wurde auf 20 bis 60 °C abgekühlt, MEK wurde dazugegeben und dann wurde p-Toluolsulfonylisocyanat langsam über die Zeit zu der Reaktionsmischung gegeben, um sicherzustellen, dass die Reaktionstemperatur zwischen 60 und 70 °C blieb. Nach der Zugabe des p-Toluolsulfonylisocyanats lief die Reaktion eine weitere Stunde unter Rühren ab. Die MEK wurde dann unter Vakuum entfernt.

Das erhaltene Reaktionsprodukt wurde für die anwendungstechnischen Versuche zu Thermopapieren eingesetzt.

### Beispiel 2

Zur Herstellung einer repräsentativen erfindungsgemäßen Verbindung der Formel (I) als Farbentwickler wurde Lactid (Puralact B3, kommerziell erhältlich von Corbion Purac B.V., Niederlande) in Gegenwart von Harnstoff in einer dem Fachmann an sich bekannten Weise einer katalytischen Ringöffnungsreaktion und Polymerisierung zum Polylactd unterworfen. wobei die Umsetzung unter Bedingungen erfolgt, bei denen sich der Harnstoff nicht oder zumindest teilweise nicht zersetzt. Beispielsweise ist dem Fachmann bekannt, dass Harnstoff beim Erhitzen in einer wässrigen Lösung mit Säuren in Kohlenstoffdioxid und Ammoniumsalze zerfällt, beim Erhitzen mit Laugen in Carbonate und Ammoniak. Die Umsetzung wird bei Temperaturen wie in der Beschreibung angegeben durchgeführt. Hierbei wird dem Harnstoff, der bevorzugt auch zur Lactid-Ring-Öffnung dient, mit dem Lactid unter dessen Ringöffnung direkt und/oder mit dem nach Polymerisierung im gewünschten Umfang Lactid-Ring-geöffneten Zwischenprodukt über die darin vorhandenen Carboxylgruppen unter Ausbildung einer Amidgruppe zu reagieren. Sodann wird das erhaltene Harnstoff Lactid-Zwischenprodukt mit p-Toluolsulfonylisocyanat (CAS®RN 4083-64-1) als Elektronenakzeptorgruppe E zur Reaktion gebracht. Es wurde ein Umsetzungsprodukt, enthaltend eine Verbindung der Formel (I) erhalten. Auf eine Aufreinigung und Isolierung des erhaltenen Reaktionsproduktes bzw. der einen Verbindung oder mehreren Verbindungen wurde verzichtet, da aus dem Stand der Technik (bspw. EP 2574645 A1 und EP 2784133 A1) bekannt war, dass gegebenenfalls anwesende Polymilchsäuren bei Anwendungstechnischen Versuchen zu Thermopapieren nicht stören sollten.

Zur Ringöffnungsreaktion wurden Lactid (Puralact B3) und Harnstoff unter Inertgas in ein Reaktionsgefäß gegeben und auf etwa 150 °C erhitzt. Es wurde ein Zinn-Katalysator in ppm-Menge hinzugegeben und über einen Zeitraum von etwa 6 Stunden bei Temperaturen bis zu 180 °C reagiert, wobei Harnstoff als Ringöffner dient und die Polymerisation zum Polylactid bzw. zur Polymilchsäure befördert.

Danach wurde das Reaktionsgemisch auf Raumtemperatur bis leicht erhöhte Temperaturen (20 °C bis 60 °C) abgekühlt. Für die Umsetzung mit p-Toluolsulfonylisocyanat wurde zunächst Methylethylketon als Lösungsmittel und dann das p-Toluolsulfonylisocyanat zugesetzt und unter Rühren über etwa 1 Stunde reagierte das p-Toluolsulfonylisocyanat ab. Das Lösungsmittel Methylethylketon wurde im Vakuum abgezogen.

Das erhaltene Reaktionsprodukt wurde für die Anwendungstechnischen Versuche zu Thermopapieren eingesetzt.

### Anwendungstechnische Beispiele mit Vergleichsbeispielen

### Beispiel 3: Materialzerkleinerung, Herstellung von Streichfarbe, Streichen von Papier

Es wurden erste Versuche gestartet, um das Farbentwickler-Material zu zerkleinern, eine Streichfarbe damit herzustellen und diese Streichfarbe dann auf Papier zu aufzustreichen.

Es wurden zwei Varianten gestrichen. Die erste Variante wurde geturraxt auf eine Partikelgröße von 8 µm und die zweite Variante wurde mit einer Rührwerkskugelmühle (beispielsweise durchführbar mit einer Rührwerkskugelmühle LabStar des Herstellers Netzsch) auf 1,6 µm zerkleinert. Das Material wurde zuerst nur geturraxt (beispielsweise durchführbar mit einem Hochleistungs-Dispergiergerät ULTRA-TURRAX® des Geräteherstellers IKA®-Werke GmbH & CO. KG, alternativ durchführbar mit einem Stativ-Dispergierer POLYTRON® PT 6100 D, Kinematica GmbH Dispersing and Mixing technology). Das Zerkleinern mit einem ULTRA-TURRAX® oder einem POLYTRON® PT 6100 D basiert auf dem Rotor-Stator-Prinzip. Der sich drehende Rotor erzeugt einen Unterdruck, welcher die zu dispergierende Probe ansaugt und durch die Statorschlitze zur Außenseite befördert. Zwischen dem Rotor / Stator (Scherspalt) unterliegt die Probe hohen Abbrems- und Beschleunigungskräften, in dem die einzelnen Partikel auseinander gerissen und durch weitere Schneid- und Pralleffekte auf wenige Mikrometer zerkleinert werden. Hierbei entsteht eine hohe Scherwirkung, welche zur Zerkleinerung von Feststoffen in der Probe führt. Beide Varianten wurden mit der gleichen Rezeptur der Streichfarbe hergestellt und auf Papier gestrichen. Die Rezepturen der Streichfarben wurden in Vorversuchen mit anderen PLA-Mustern ermittelt. Die Muster der erfindungsgemäßen Rezepturen der Streichfarben wurden mit zwei kommerziell erhältlichen Standard Sorten verglichen (BPA und Pergafast).

Hierzu wurden Rezepturen (Standardformierungen) enthaltend erfindungsgemäße PLA-Muster und ggf. Vergleichsrezepturen auf Papier aufgestrichen, die Papiere in üblicher Weise getrocknet. In der Papierherstellung werden drei Grade für den Trockengehalt von Papier und Zell-stoff unterschieden "atro" (absolut trocken), "lutro" (lufttrocken) und "otro" (ofentrocken). Die Angabe erfolgt jeweils in "% atro", "% lutro" und "% otro". Wobei "atro" für ein Papier oder Zellstoff mit 0 % Wassergehalt steht. Für "lutro" wird hierbei ein "normaler" (für das Papier grundsätzlich notwendiger) Feuchtigkeitsgehalt als Basis der Berechnung eingesetzt. Bei Zellstoff und Holzschliff bezieht sich die Rechnungsmasse in der Regel auf 90:100, das heißt 90 Teile Stoff, 10 Teile Wasser. Der Zustand von Papier oder Zellstoff nach der Trocknung unter festgelegten, definierten Bedingungen wird als "otro" bezeichnet.

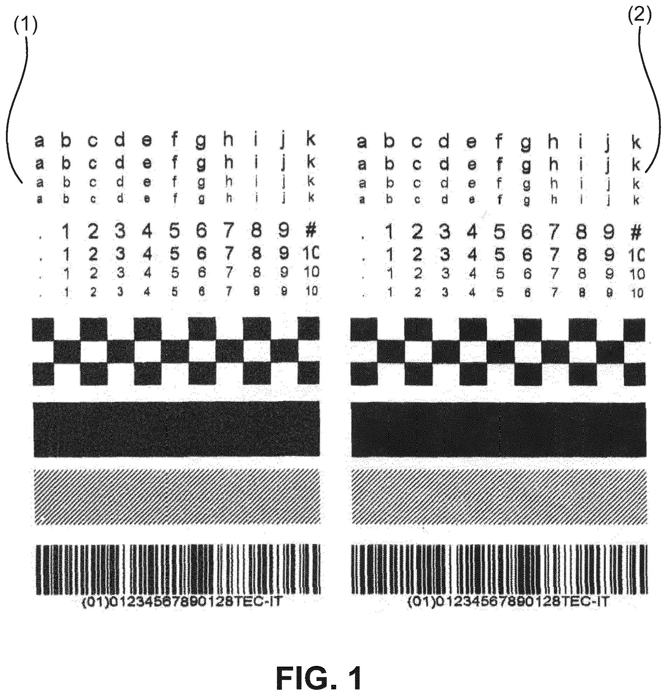

Mit den erhaltenen Papieren wurden dann Tests, ausgewählt aus folgenden Standard-Tests durchgeführt:
- Ausdrucken mit dem Epson Drucker:
Die dynamische Druckdichte wird wie folgt bestimmt: Das thermische Aufzeichnungsmaterial welches oben beschrieben ist wurde mit dem Atlantek 400 (ATLANTEK Model 400 Thermal Response Test System der Firma Global Media Instruments, LLC (USA)) Drucker thermisch mit unterschiedlichen Energiestufen bedruckt. Die dadurch erhaltenen thermisch bedruckten Bereiche wurden unter Zuhilfenahme eines Spektraldensitometers (SpectroDens des Herstellers Techkon) gemessen. **Fig. 1** zeigt die erhaltenen Ausdrucke im Vergleich eines erfindungsgemäßen PLA-Musters (1) mit einer Partikelgröße von 8 µm mit einem Entwickler des Standes der Technik, BPA (2).
- Messen der dynamischen Druckdichte:

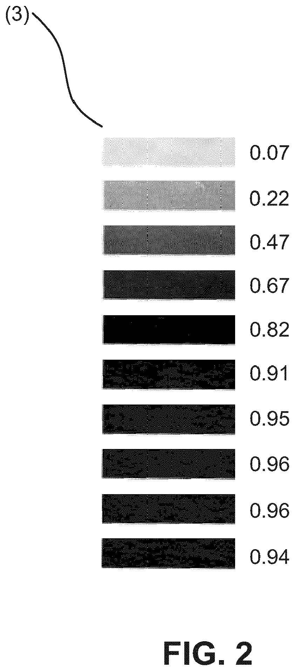

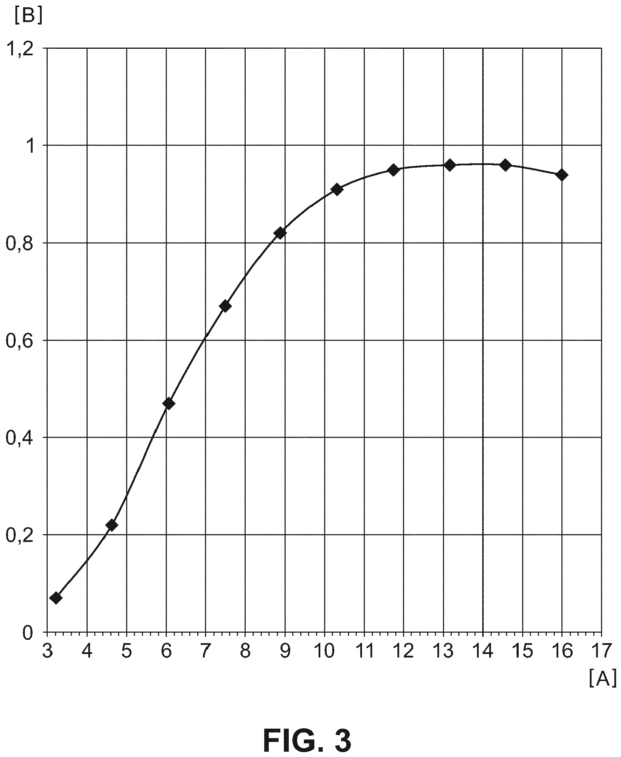

**Fig. 2** zeigt die gemessene dynamische Druckdichte als Ausdruck für ein erfindungsgemäßes PLA-Muster (1) mit einer Partikelgröße von 8 µm. **Fig. 2** zeigt die dynamische Druckdichte als Diagramm, worin [A] die Energie (mj/mm²) und [B] die dynamische Druckdichte bedeuten.
- Messen der statischen Druckdichte:
Die statische Druckdichte wird wie folgt bestimmt: Das thermische Aufzeichnungsmaterial, welches zuvor beschrieben ist wurde mit dem Heat gradient tester No. 884 (Toyoseiki) bei unterschiedlichen Temperaturen, bei definiertem Druck über eine definierte Zeit, bedruckt. Die dadurch erhaltenen thermisch bedruckten Bereiche wurden unter Zuhilfenahme eines Spektraldensitometers (SpectroDens des Herstellers Techkon) gemessen.
- Testen der Umweltbeständigkeiten:
Zur Prüfmethode:
Zur messtechnischen Erfassung der Umweltbeständigkeiten eines Thermoausdrucks auf den wärmeempfindlichen Aufzeichnungsmaterialien der erfindungsgemäßen Beispiele und der Vergleichsbeispiele wurden jeweils auf den zu testenden wärmeempfindlichen Aufzeichnungsmaterialien schwarz/weißkariert gestaltete Thermoprobeausdrucke mit einem Gerät des Typs Atlantek 400 erstellt, wobei ein Thermokopf mit einer Auflösung von 300 dpi und einer Energie pro Flächeneinheit von 16 mJ/mm² zum Einsatz kam
Nach der Erstellung des schwarz/weiß-karierten Thermoprobeausdruckes wurde nach einer Ruhezeit von mehr als 5 Minuten an jeweils drei Stellen der schwarz gefärbten Flächen des Thermoprobeausdruckes eine Bestimmung der Druckdichte mit einem Densitometer SpectroDens der Firma Techkon durchgeführt. Aus den jeweiligen Messwerten der schwarz gefärbten Flächen wurde jeweils der Mittelwert gebildet.
   ∘ Die Thermoprobeausdrucke mit Lanolin bestreichen.
   ∘ 5 Minuten einwirken lassen und anschließend vorsichtig abwischen,.
   ∘ Die Proben 4 Stunden bei 23 °C, 50 % im klimatisierten Messraum aufhängen. An jeweils den drei Stellen der schwarz gefärbten Flächen des Thermoprobeausdruckes wurde eine Bestimmung der Druckdichte mit einem Densitometer SpectroDens der Firma Techkon durchgeführt, welche vor der Behandlung des Thermoprobeausdruckes bereits gemessen wurden. Aus den jeweiligen Messwerten der schwarz gefärbten Flächen wurde jeweils der Mittelwert gebildet.
   ∘ Die Thermoprobeausdrucke in ein Ethanolbad (25 %) legen.
   ∘ 20 Minuten einwirken lassen und anschließend vorsichtig abtupfen
   ∘ Die Proben 24 Stunden bei 23 °C, 50 % im klimatisierten Messraum aufhängen.
   ∘ An jeweils den drei Stellen der schwarz gefärbten Flächen des Thermoprobeausdruckes eine Bestimmung der Druckdichte mit einem Densitometer SpectroDens der Firma Techkon durchführen, welche vor der Behandlung des Thermoprobeausdruckes gemessen wurden. Aus den jeweiligen Messwerten der schwarz gefärbten Flächen wurde jeweils der Mittelwert gebildet
   ∘ Die Thermoprobeausrucke mit Tesa-Grafik-Film bekleben (Weichmacher) und sofort messen.
   ∘ Die Proben 24 Stunden bei 23 °C, 50 % im klimatisierten Messraum aufhängen.
   ∘ An jeweils den drei Stellen der schwarz gefärbten Flächen des Thermoprobeausdruckes wurde eine Bestimmung der Druckdichte mit einem Densitometer SpectroDens der Firma Techkon durchgeführt, welche vor der Behandlung des Thermoprobeausdruckes bereits gemessen wurden. Aus den jeweiligen Messwerten der schwarz gefärbten Flächen wurde jeweils der Mittelwert gebildet.
   ∘ Die Thermoprobeausdrucke in ein Wasserbad legen.
   ∘ 20 Minuten einwirken lassen und anschließend vorsichtig abtupfen (Löschpapier).
   ∘ Die Proben 24 Stunden bei 23 °C, 50 % im klimatisierten Messraum aufhängen.
   ∘ . An jeweils den drei Stellen der schwarz gefärbten Flächen des Thermoprobeausdruckes wurde eine Bestimmung der Druckdichte mit einem Densitometer SpectroDens der Firma Techkon durchgeführt, welche vor der Behandlung des Thermoprobeausdruckes gemessen wurden. Aus den jeweiligen Messwerten der schwarz gefärbten Flächen wurde jeweils der Mittelwert gebildet
Messkriterien:
Als Messkriterien für die Streichfarbe wurden zugrunde gelegt:
Messung 1: Partikelgröße (TG) von 8 µm;
Messung 2: Partikelgröße (TG) von 1,6 µm.

| **Messkriterien:** | **TG [%]** | **Temperatur [°C]** | **pH-Wert** |
|---|---|---|---|
| Messung 1 | 22,8 | 22,1 | 4,04 |
| Messung 2 | 22,5 | 22,2 | 3,71 |

### Beispiel 4:

Ein erfindungsgemäß, beispielsweise nach Beispiel 1, oder in manchen Fällen nach Beispiel 2, hergestelltes Muster ("PLA"-Muster) wurde für anwendungstechnische Versuche zu Thermopapieren eingesetzt.

Hierzu wurde eine Rezeptur (Standardformierung) enthaltend ein erfindungsgemäßes PLA-Muster auf Papier aufgestrichen, die Papiere in üblicher Weise getrocknet und mit den erhaltenen Papieren wurden dann Standard-Tests, wie in Beispiel 3 angegeben durchgeführt.

Mit dem eingesetzten erfindungsgemäßen PLA-Muster wurde ein D-Max von 0,96 (mit ATLANTEK Model 400 Thermal Response Test System der Firma Global Media Instruments, LLC (USA)) ermittelt.

Der Epson Ausdruck mit dem eingesetzten erfindungsgemäßen PLA-Muster sieht schwarz aus. Hier wurde eine optische Druckdichte von 0,98 gemessen. Der Ausdruck ist etwas ungleichmäßig, was - ohne an eine bestimmte Theorie gebunden sein zu wollen - an groben Partikeln liegen könnte, da das eingesetzte Material zunächst nur auf 8 µm geturraxt werden konnte und daher auf dem gestrichenen Papier auch noch einige grobe Partikel vorhanden waren. **Fig. 1** zeigt zwei beispielhafte Ausdrucke mit Versgleichskala.

Der 2D Barcode mit dem eingesetzten erfindungsgemäßen PLA-Muster konnte gelesen werden mit einem Wert von 2,4; der Vergleich BPA hat einen Wert von 2,2.

Es wurden noch weitere Auswertungen vorgenommen.

### Beispiel 5: Anleitung zum Spot-Test

**Tabelle 1: Substanz A:**

| | **TG [%]** | **Lutro [g]** | **Otro [g]** |
|---|---|---|---|
| ODB-2 | 35 | 170,26 | 59,6 |
| PVA (NM-11) | 12,5 | 329,74 | 41,2 |

| | | | |
|---|---|---|---|
| PVA = Polyvinylalkohol; TG = Trockengewicht | | | |

**Tabelle 2: Substanz B:**

| | TG [%] | Lutro [g] | Otro [g] |
|---|---|---|---|
| Dispergiermittel (L-3266) | 18 | 13,22 | 2,38 |
| Entwickler | 100 | 47,619 | 47,619 |
| Wasser | | 189,16 | |

Substanz A : Farbgeber-Dispersion mit Binder
Substanz B: Entwickler
Substanz C: Dispergiermittel für Entwickler

13,2 g von Substanz C, 189,2 g Wasser und 47,6 g vom Entwickler mischen und diese Dispersion möglichst zerkleinern, beispielsweise durchführbar mit einem Hochleistungs-Dispergiergerät ULTRA-TURRAX® des Geräteherstellers IKA®-Werke GmbH & CO. KG.

Die Farbe dann folgendermaßen ansetzen: 55 g Substanz B und 28 g Substanz A (Farbgeber). Das entspricht den Verhältnissen, mit welchen der Fachmann üblicherweise arbeitet.

Diese Dispersion ist gut zu mixen. Auf ein Papier, ein Trägersubstrat mit einer Zwischenschicht, wird ein Tesaband (Klebeband, Klebefilm, der Firma Tesa SE, Deutschland; der Begriff "Klebeband" ist eine Sammelbezeichnung für ein- oder beidseitig mit Haftklebstoffen beschichtete, streifenförmige Trägermaterialien, z. B. aus Kunststofffolien) quer aufgeklebt. Die fertige Dispersion wird auf das Tesaband in einer Linie verteilt.

Mit einem Stab (Objektträger, Magnetrührer, Lineal) wird die Dispersion über das Papier gestrichen, wobei wenig zurückbleibt. Das Papier wird an der Luft trocknen gelassen, oder maximal bei 60 °C über 1 min im Ofen getrocknet.

Mit einem Feuerzeug wird das Papier dann von hinten kurz erhitzt. Diese kurze Einwirkung reicht bereits aus, um eine (Farb-)Reaktion zu bewirken.

### Beispiel 6: Testmethode

### Bestimmung der Klimabeständigkeit von wärmeempfindlichen Aufzeichnungsmaterialien (bei 40 °C und 90 % r.F. für 24 Stunden); (r.F. = relative Feuchte)

Zur messtechnischen Erfassung der Klimabeständigkeit eines Thermoausdrucks auf den wärmeempfindlichen Aufzeichnungsmaterialien der erfindungsgemäßen Beispiele und der Vergleichsbeispiele wurden jeweils auf den zu testenden wärmeempfindlichen Aufzeichnungsmaterialien schwarz/weiß-kariert gestaltete Thermoprobeausdrucke mit einem Gerät des Typs ATLANTEK Model 400 Thermal Response Test System der Firma Global Media Instruments, LLC (USA) erstellt, wobei ein Thermokopf mit einer Auflösung von 300 dpi und einer Energie pro Flächeneinheit von 16 mJ/mm² zum Einsatz kam.

Nach der Erstellung des schwarz/weiß-karierten Thermoprobeausdruckes wurde nach einer Ruhezeit von mehr als 5 Minuten an jeweils drei Stellen der schwarz gefärbten Flächen und der ungefärbten Flächen des Thermoprobeausdruckes eine Bestimmung der Druckdichte mit einem Densitometer Gretag Macbeth Model RD - 1152 "B" durchgeführt. Aus den jeweiligen Messwerten der schwarz gefärbten Flächen und der ungefärbten Flächen wurde jeweils der Mittelwert gebildet.

Ein Thermoprobeausdruck wurde bei 40 °C und einer relativen Feuchtigkeit von 90 % in einen Klimaschrank gehängt. Nach wurde 24 Stunden wurde der Thermopapierausdruck entnommen, auf Raumtemperatur abgekühlt und es wurde erneut an je drei Stellen der schwarz gefärbten Flächen und der ungefärbten Flächen des Thermoprobeausdrucks eine Bestimmung der Druckdichte mit einem Densitometer Gretag Macbeth Model RD - 1152 "B" durchgeführt. Aus den jeweiligen Messwerten schwarz gefärbten Flächen und der ungefärbten Flächen wurde jeweils der Mittelwert gebildet.

Die Beständigkeit des Druckbildes in % entspricht dem Quotienten aus dem gebildeten Mittelwert der Druckdichte der gefärbten Flächen vor und nach der Lagerung im Klimaschrank multipliziert mit 100.

### Beispiel 7: Testmethode

### Bestimmung der Beständigkeit von wärmeempfindlichen Aufzeichnungsmaterialien gegenüber Lanolin (10 Minuten):

Zur messtechnischen Erfassung der Beständigkeit eines Thermoausdrucks auf den wärmeempfindlichen Aufzeichnungsmaterialen der erfindungsgemäßen Beispiele und der Vergleichsbeispiele gegenüber Lanolin wurden jeweils auf dem zu testenden wärmeempfindlichen Aufzeichnungsmaterialen schwarz/weiß-kariert gestaltete Thermoprobeausdrucke mit einem Gerät des Typs ATLANTEK Model 400 Thermal Response Test System Atlantek 400 der Firma Global Media Instruments, LLC (USA) erstellt, wobei ein Thermokopf mit einer Auflösung von 300 dpi und einer Energie pro Flächeneinheit von 16 mJ/mm² zum Einsatz kam.

Nach der Erstellung der schwarz/weiß-karierten Thermoprobeausdrucke wurden nach einer Ruhezeit von mehr als 5 Minuten an drei Stellen der schwarz gefärbten Flächen und der ungefärbten Flächen der Thermoprobeausdrucke eine Bestimmung der Druckdichte mit einem Densitometer Gretag MacBeth TYPE D19C durchgeführt. Aus den jeweiligen Messwerten der schwarz gefärbten Flächen und der ungefärbten Flächen wurde jeweils der Mittelwert gebildet.

Anschließend wurde der erstellte Thermoprobeausdruck des zu testenden wärmeempfindlichen Aufzeichnungsmaterials satt mit Lanolin bestrichen. Nach einer Einwirkzeit von 10 Minuten wird das Lanolin vorsichtig abgewischt es wurde erneut an je drei Stellen der schwarz gefärbten Flächen und der ungefärbten Flächen der Thermoprobeausdrucke eine Bestimmung der Druckdichte mit einem Densitometer Gretag MacBeth TYPE D19C durchgeführt. Aus den jeweiligen Messwerten der schwarz gefärbten Flächen und der ungefärbten Flächen wurde jeweils der Mittelwert gebildet.

Die Beständigkeit gegenüber Lanolin in % entspricht dem Quotienten aus dem gebildeten Mittelwert der Druckdichte vor der Lanolinbehandlung und nach der Lanolinbehandlung multipliziert mit 100.

### Beispiel 8: Testmethode

### Beständigkeit gegen Wasser und wässrige Ethanollösunqen (23 °C, 50 % r.F., 24 h):

Mit Hilfe dieser Tests wird die Beständigkeit des auf der Aufzeichnungsschicht erzeugten Bildes gegen Wasser und wässrige Lösungen beurteilt. Auf die mit dem TOSHIBA TEC-Drucker 572 bei maximaler Druckenergie (Stufe +1) erzeugten bedruckten Flächen wird ein Tropfen destillierten Wassers oder der gewählten wässrigen 25 %-ige Ethanollösung aufgebracht. Die überschüssige Prüfflüssigkeit wird nach 20 Minuten Einwirkzeit mit einem Filterpapier oder Baumwolltuch abgetupft und der Testbogen anschließend 24 Stunden bei Raumklima (23 °C, 50 % relative Feuchte) gelagert. Vor Aufbringen der jeweiligen Prüfflüssigkeit und nach Ablauf der Lagerzeit wird mit dem Macbeth-Densitometer 1150 die optische Dichte der bedruckten Flächen sowie deren Differenz bestimmt.

Die Beständigkeit gegenüber Wasser bzw. wässrigen Ethanollösungen entspricht dem Quotienten aus dem gebildeten Mittelwert der Druckdichte vor der und nach der Behandlung mit der jeweiligen Prüfflüssigkeit multipliziert mit 100.

### Beispiel 9: Testmethode Bekk-Glätte

Die Glätte (bzw. Rauigkeit) ist eine wesentliche Oberflächeneigenschaft von Papieren. Sie repräsentiert die Güte der Oberflächenstruktur. Die Glätte nach Bekk beruht auf dem Prinzip der Luftstrommessung. Dazu wird eine Probe auf eine spezifizierte Glasplatte gelegt und über eine Gummiplatte mit definiertem Druck angepresst. Anschließend wird ein bestimmtes Luftvolumen von außen durch die Kontaktfläche über ein aufgebautes Vakuum gesaugt. Die Messung der Glätte nach Bekk erfolgt in Anlehnung an die DIN 53107:2016-05 "Prüfung von Papier und Pappe - Bestimmung der Glätte nach Bekk".

Die Glätte nach Bekk ist die Zeit in Sekunden, welche benötigt wird, um ein bestimmtes Luftvolumen aus der Umgebungsluft bei definierter Druckdifferenz zwischen einer Papieroberfläche und einer ringförmigen, nahezu vollkommen ebenen Fläche radial nach innen unter festgelegten Kontaktbedingungen hindurch zu saugen.

An den Proben wurden je zehn Messungen an der Oberseite (OS) durchgeführt. Für jede Messung wurde eine neue Probe verwendet. Die Probe wurde mit der zu prüfenden Seite auf die Glasplatte gelegt, sodass diese völlig bedeckt ist. Anschließend wurden Gummiplatte und Druckteller auf die Probe gesetzt, die Flächenpressung von 100 kPa aufgebracht und im Vakuumbehälter der Vordruck Pv erzeugt. Anschließend wird der Vakuumbehälter mit der Bohrung in der Glasplatte verbunden. Gemessen wird nun die Zeit des Druckabfalles zwischen p₁ (Messdruck am Messbeginn, in Kilopascal) und p₂ (Messdruck am Messende, in Kilopascal). Die Messungen wurden mit einem Bekk Glätte Prüfgerät des Geräteherstellers Messmer Büchel durchgeführt. Dieses Prüfgerät kann nach DIN 53107 / ISO 5627 uneingeschränkt zur Prüfung eingesetzt werden.

"OS" steht in dieser Schrift im Zusammenhang mit Messungen der Glätte nach Bekk für die Oberseite der Papierprobe und damit für die gestrichene Seite der jeweiligen Papierprobe.

### Bezugszeichenliste

(1) = PLA-Muster - 8 µm
(2) = BPA (2,2 bis (4-hydroxyphenyl)-Propan; CAS® RN 80-05-7)
(3) = PLA-Muster - 8 µm; Dynamische Druckdichte

[A] = Energie (mj/mm²)
[B] Dynamische Druckdichte

## Patentansprüche

1. Beschichtungszusammensetzung zur Herstellung eines wärmeempfindlichen Aufzeichnungsmaterials oder wärmeempfindliche Aufzeichnungsschicht, umfassend
- einen oder mehrere Farbstoffvorläufer; und
- einen oder mehrere Farbentwickler, wobei der eine oder zumindest einer der mehreren Farbentwickler eine Verbindung ist, die im Farbentwickler
a) mindestens eine strukturelle Einheit der Milchsäure
und
b) unabhängig voneinander zwei endständige
Elektronenakzeptorgruppen enthält,
wobei der eine oder der zumindest eine der mehreren Farbentwickler eine Verbindung der Formel (I) ist, 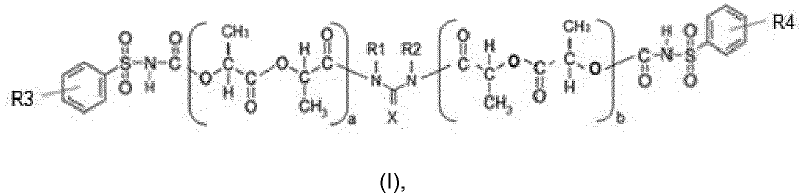 wobei X für O, S oder NH steht; R1 und R2 unabhängig voneinander für ein Wasserstoffatom, eine C1-C6-Alkylgruppe, eine C3-C6-Cycloalkylgruppe oder eine C2-C6-Alkenylgruppe stehen; R3 und R4 unabhängig voneinander für ein Wasserstoffatom, eine C1-C6-Alkylgruppe, eine C1-C6-Alkoxygruppe oder eine Halogengruppe stehen; und a und b jeweils für eine ganze Zahl stehen und die Bedingungen a ≥ 0, b ≥ 0 und (a+b) ≥ 1 erfüllen.

2. Beschichtungszusammensetzung zur Herstellung eines wärmeempfindlichen Aufzeichnungsmaterials oder wärmeempfindliche Aufzeichnungsschicht nach Anspruch 1, wobei der eine oder der zumindest eine der mehreren Farbentwickler der Formel (I) eine Verbindung ist, die
i. eine strukturelle Einheit der Formel (Ic) enthält, 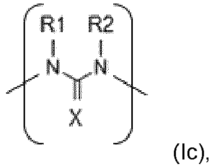 wobei X für O, S oder NH steht und R1 und R2 unabhängig voneinander für ein Wasserstoffatom, eine Methylgruppe, vorzugsweise für ein Wasserstoffatom, stehen;
und/oder
ii. eine oder zwei endständige Elektronenakzeptoren mit einer strukturellen Einheit der Formel (Ib), 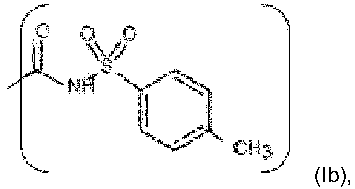 aufweist.

3. Beschichtungszusammensetzung oder wärmeempfindliche Aufzeichnungsschicht nach einem der Ansprüche 1 bis 2, wobei die Partikelgrößen, gemessen durch Laserbeugung, des einen oder zumindest eines der mehreren Farbentwickler, jeweils unabhängig voneinander, im Bereich von 0,5 bis 10 µm, vorzugsweise im Bereich von 0,8 bis 8 µm, weiter bevorzugt im Bereich von 0,8 bis 4 µm; oder wobei die Partikelgrößen, gemessen als X₅₀-Wert durch Laserbeugung, des einen oder zumindest eines der mehreren Farbentwickler, jeweils unabhängig voneinander, im Bereich von 0,8 bis 2 µm, vorzugsweise im Bereich von 0,85 bis 1,7 µm, und besonders bevorzugt im Bereich von 0,85 bis 1,65 µm, liegen.

4. Beschichtungszusammensetzung oder wärmeempfindliche Aufzeichnungsschicht nach einem der Ansprüche 1 bis 3, die ferner mindestens einen weiteren Farbentwickler der Formel (II) und/oder der Formel (III), 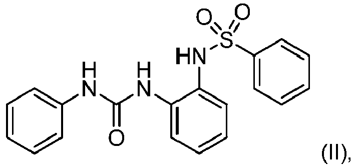 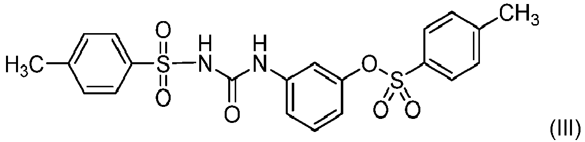 enthält;
und/oder
wobei die Beschichtungszusammensetzung oder wärmeempfindliche Aufzeichnungsschicht nach einem der vorherigen Ansprüche, zudem umfasst, ein oder mehrere Bestandteile aus der Gruppe bestehend aus
- Sensibilisatoren,
- Pigmente,
- Dispergiermittel,
- Antioxidationsmittel,
- Trennmittel,
- Entschäumer,
- Lichtstabilisatoren,
und
- Aufheller;
und/oder
wobei die Beschichtungszusammensetzung oder wärmeempfindliche Aufzeichnungsschicht, einen Sensibilisator ausgewählt aus der Gruppebestehend aus Benzylnaphthylether (BNE), Diphenylsulfon (DPS), Ethylenglycol-m-tolyl-ether (EGTE), Ethylenglycol-phenoxyethan (EGPE), 1,2-Di(m-methylphenoxy)ethan (DMPE) und 1,2-Diphenoxyethan (DPE), oder eine Kombination davon umfasst.

5. Beschichtungszusammensetzung oder wärmeempfindliche Aufzeichnungsschicht nach einem der vorherigen Ansprüche, wobei die flächenbezogene Masse der Beschichtungszusammensetzung oder wärmeempfindlichen Aufzeichnungsschicht im Bereich von 1,5 bis 8 g/m² liegt, vorzugsweise im Bereich von 1,5 bis 6 g/m², weiter bevorzugt im Bereich von 2 bis 6 g/m², besonders bevorzugt im Bereich von 2,0 bis 5,5 g/m².

6. Streichfarbe zur Herstellung einer Beschichtungszusammensetzung oder einer wärmeempfindlichen Aufzeichnungsschicht, umfassend
- einen oder mehrere Farbstoffvorläufer; und
- einen oder mehrere Farbentwickler, wobei der eine oder zumindest einer der mehreren Farbentwickler eine Verbindung ist, wie in einem der Ansprüche 1 bis 5 definiert.

7. Wärmeempfindliches Aufzeichnungsmaterial, umfassend
- ein Trägersubstrat,
und
- eine wärmeempfindliche Aufzeichnungsschicht, wie in einem der Ansprüche 1 bis 5 definiert;
vorzugsweise wobei das wärmeempfindliche Aufzeichnungsmaterial zusätzlich eine zwischen dem Trägersubstrat und der wärmeempfindlichen Aufzeichnungsschicht gelegene Zwischenschicht enthält, wobei die Zwischenschicht vorzugsweise Pigmente enthält;
weiterbevorzugt, wobei es sich bei den Pigmenten um
a) organische Pigmente, vorzugsweise um organische Hohlkörperpigmente handelt
und/oder
b) anorganischen Pigmente handelt, vorzugsweise ausgewählt aus der Liste bestehend aus kalziniertem Kaolin, Siliziumoxid, Bentonit, Kalziumkarbonat, Aluminiumoxid und Böhmit;
vorzugsweise ein wärmeempfindliches Aufzeichnungsmaterial, wobei die wärmeempfindliche Aufzeichnungsschicht vollständig oder teilweise mit einer Schutzschicht bedeckt ist.

8. Produkte, vorzugsweise Lottoscheine, TITO-Tickets (Ticket-in, Ticket-out), Fahrscheine, Eintrittskarten, Flug-, Bahn-, Schiff- oder Busticket, Glücksspielbeleg, Parkticket, Etikett, Kassenbon, Bankauszüge, Selbstklebeetikett, medizinisches Diagrammpapier, Faxpapier, Sicherheitspapier oder Barcode-Etiketten, umfassend ein erfindungsgemäßes wärmeempfindliches Aufzeichnungsmaterial nach Anspruch 7.

9. Verwendung eines wärmeempfindlichen Aufzeichnungsmaterials nach einem der Ansprüche 7 bis 8 als Lottoscheine, TITO-Tickets (Ticket-in, Ticket-out), Fahrscheine, Eintrittskarten, Flug-, Bahn-, Schiff- oder Busticket, Glücksspielbeleg, Parkticket, Etikett, Kassenbon, Bankauszüge, Selbstklebeetikett, medizinisches und/oder technisches Diagrammpapier, Faxpapier, Sicherheitspapier oder Barcode-Etiketten.

10. Verfahren zur Herstellung eines wärmeempfindlichen Aufzeichnungsmaterials nach einem der Ansprüche 7 bis 8 oder einer wärmeempfindlichen Aufzeichnungsschicht nach einem der Ansprüche 1 bis 5, umfassend die folgenden Verfahrensschritte:
i. Bereitstellen oder Herstellen eines Trägersubstrates; sowie Bereitstellen oder Herstellen einer Beschichtungszusammensetzung nach einem der Ansprüche 1 bis 5 oder einer Streichfarbe nach Anspruch 6;
ii. Aufbringen der Beschichtungszusammensetzung auf das Trägersubstrat oder auf eine darauf angeordnete Zwischenschicht;
iii. Trocknen der aufgebrachten Beschichtungszusammensetzung, so dass eine wärmeempfindliche Aufzeichnungsschicht resultiert, die gemeinsam mit dem Trägersubstrat in einem wärmeempfindlichen Aufzeichnungsmaterial vorliegt;
iv. vorzugsweise ein vorstehendes Verfahren umfassend die Schritte i. bis iii. zur Herstellung eines wärmeempfindlichen Aufzeichnungsmaterials oder zur Herstellung einer wärmeempfindlichen Aufzeichnungsschicht, ferner umfassend den Verfahrensschritt des Aufbringens einer die wärmeempfindliche Aufzeichnungsschicht vollständig oder teilweise bedeckenden Schutzschicht und Trocknen der Schutzschicht, so dass eine wärmeempfindliche Aufzeichnungsschicht resultiert, die gemeinsam mit dem Trägersubstrat in einem wärmeempfindlichen Aufzeichnungsmaterial vorliegt und vollständig oder teilweise mit der Schutzschicht bedeckt ist.

11. Verbindung, vorzugsweise zur Verwendung als Farbentwickler in einer Beschichtungszusammensetzung zur Herstellung eines wärmeempfindlichen Aufzeichnungsmaterials oder als Farbentwickler in einer wärmeempfindlichen Aufzeichnungsschicht oder als Farbentwickler in einer Streichfarbe zur Herstellung einer Beschichtungszusammensetzung oder einer wärmeempfindlichen Aufzeichnungsschicht, wobei die Verbindung umfasst:
a) mindestens eine strukturelle Einheit der Milchsäure
und
b) unabhängig voneinander zwei endständige
Elektronenakzeptorgruppen für den Farbentwickler enthält,
wobei die Verbindung eine Verbindung der Formel (I) ist, wie diese in Anspruch 1 angegeben und definiert ist;
vorzugsweise, wobei die Verbindung eine Verbindung der Formel (I), wie in Anspruch 1 angegeben und definiert, ist, die eine strukturelle Einheit der Formel (Ic) enthält, wie diese in Anspruch 2 angegeben und definiert ist;
weiter bevorzugt, wobei die Verbindung eine Verbindung der Formel (I), wie diese in Anspruch 1 angegeben und definiert, ist, die unabhängig voneinander zwei endständige Elektronenakzeptorgruppen mit der strukturellen Einheit der Formel (Ib), wie diese in Anspruch 1 angegeben und definiert ist, umfasst; und wobei in der Verbindung der Formel (I) auch eine strukturelle Einheit der Formel (Ic), wie diese in Anspruch 2 angegeben und definiert ist, vorliegt;
noch weiter bevorzugt, wobei die Verbindung eine Verbindung ist, in der mindestens eine strukturelle Einheit der Formel (lila) und/oder der Formel (IIIb) der Milchsäure bzw. deren Lactid in der Verbindung der Formel (I) vorliegt, 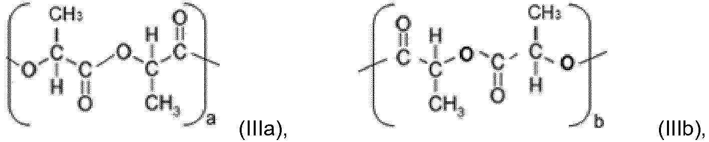 wobei unabhängig voneinander a und b eine ganze Zahl von 1 bis 10, vorzugsweise von 1 bis 6, weiter bevorzugt von 1 bis 3, ganz bevorzugt 2, sind;
und besonders bevorzugt, wobei die Verbindung eine Verbindung der Formel (I) ist, wie diese in Anspruch 1 angegeben und definiert ist, wobei die Verbindung eine oder zwei endständige strukturelle Einheiten der Formel (Ib), vorzugsweise zwei endständige strukturelle Einheiten der Formel (Ib), 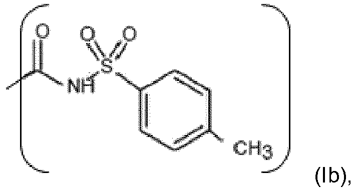 aufweist.

12. Verbindung nach Anspruch 11, vorzugsweise zur Verwendung als Farbentwickler in einer Beschichtungszusammensetzung zur Herstellung eines wärmeempfindlichen Aufzeichnungsmaterials oder als Farbentwickler in einer wärmeempfindlichen Aufzeichnungsschicht oder als Farbentwickler in einer Streichfarbe zur Herstellung einer Beschichtungszusammensetzung oder einer wärmeempfindlichen Aufzeichnungsschicht, wobei die Partikelgrößen, gemessen durch Laserbeugung, der einen oder zumindest einer der Verbindungen bei Vorliegen von mehreren Verbindungen, jeweils unabhängig voneinander, im Bereich von 0,5 bis 10 µm, vorzugsweise im Bereich von 0,8 bis 8 µm, weiter bevorzugt im Bereich von 0,8 bis 4 µm; oder wobei die Partikelgrößen, gemessen als X₅₀-Wert durch Laserbeugung, des einen oder zumindest eines der mehreren Farbentwickler, jeweils unabhängig voneinander, im Bereich von 0,8 bis 2 µm, vorzugsweise im Bereich von 0,85 bis 1,7 µm, und besonders bevorzugt im Bereich von 0,85 bis 1,65 µm, liegen.

13. Verwendung einer Verbindung nach einem der Ansprüche 11 und 12,
i. als Farbentwickler, wie unter A) bis D) angegeben, und/oder
ii. zur Herstellung eines Farbentwicklers, wie unter A) bis D) angegeben, und/oder
iii. als Farbentwickler zur Herstellung, wie unter A) bis D) angegeben,
wobei der für Farbentwickler geeignet und/oder vorgesehen ist für, und/oder zur Herstellung dient für
A) eine Beschichtungszusammensetzung zur Herstellung eines wärmeempfindlichen Aufzeichnungsmaterials; oder
B) eine wärmeempfindliche Aufzeichnungsschicht; oder
C) eine Streichfarbe zur Herstellung einer Beschichtungszusammensetzung zur Herstellung eines wärmeempfindlichen Aufzeichnungsmaterials oder wärmeempfindliche Aufzeichnungsschicht; oder
D) ein wärmeempfindliches Aufzeichnungsmaterial.

14. Verfahren zur Herstellung einer Verbindung nach einem der Ansprüche 11 und 12, vorzugsweise einer Verbindung zur Verwendung als Farbentwickler in einer Beschichtungszusammensetzung zur Herstellung eines wärmeempfindlichen Aufzeichnungsmaterials oder als Farbentwickler in einer wärmeempfindlichen Aufzeichnungsschicht oder als Farbentwickler in einer Streichfarbe zur Herstellung einer Beschichtungszusammensetzung oder einer wärmeempfindlichen Aufzeichnungsschicht, wobei das Verfahren die Umsetzung umfasst, von
(i) einer Verbindung (d.h. mit einem cyclischen Ester einer Hydroxycarbonsäure, Lactid) der Formel (IV), 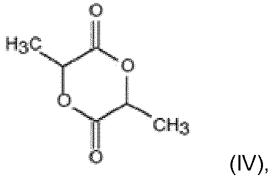 unter Ringöffnung des Lactids der Formel (IV), vorzugsweise in Gegenwart eines Katalysators, und gewünschtenfalls Polymerisation der durch Ringöffnung des Lactids der Formel (IV) erhaltenen Zwischenverbindung zu einer oder mehreren Verbindungen, umfassend mindestens eine strukturelle Einheit der Formel (lila) und/oder der Formel (IIIb) der Milchsäure bzw. deren Lactid, 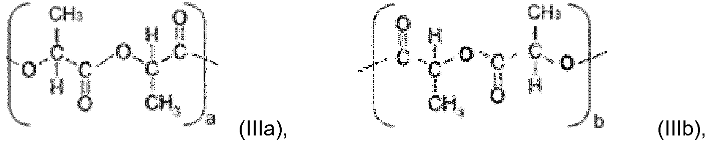 wobei unabhängig voneinander a und b eine ganze Zahl von 1 bis 10, vorzugsweise von 1 bis 6, weiter bevorzugt von 1 bis 3, ganz bevorzugt 2, sind,
(ii) einer Verbindung der Formel (V), 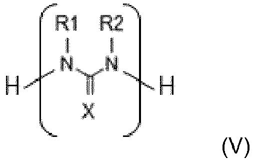 wobei X für O, S oder NH steht und R1 und R2 unabhängig voneinander für ein Wasserstoffatom, eine Methylgruppe, vorzugsweise für ein Wasserstoffatom, stehen;
wobei vorzugsweise die Umsetzung unter Bedingungen erfolgt, bei denen sich die Verbindung der Formel (V) nicht oder zumindest teilweise nicht zersetzt, vorzugsweise unter Bedingungen, wobei die Temperatur bei der Umsetzung mindestens 1 °C, vorzugsweise mindestens 2 °C oder 3 °C oder 4 °C oder 5 °C niedriger, weiter bevorzugt mindestens 5 °C bis 10 °C niedriger, als die Zersetzungstemperatur einer Verbindung der Formel (V) erfolgt;
und
(iii) des durch Umsetzung der Verbindungen der Formel (IV) und der Formel (V), mit oder ohne vorhergehende Aufreinigung und/oder mit oder ohne vorhergehende Isolierung, erhaltenen Zwischenproduktes mit einer Verbindung der Formel (VIa) und/oder einer Verbindung der Formel (VIb), 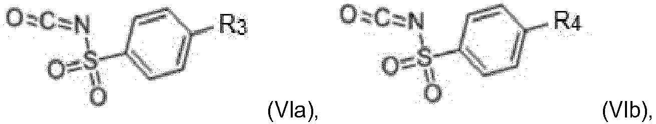 wobei R3 und R4 unabhängig voneinander für ein Wasserstoffatom, eine C1-C6-Alkylgruppe, eine C1-C6-Alkoxygruppe oder eine Halogengruppe, vorzugsweise für ein Wasserstoffatomoder eine Methylgruppe, weiter bevorzugt für eine Methylgruppe, besonders bevorzugt ein p-Toluolsulfonylisocyanat der Formel (VII) als Vorläuferverbindung einer Elektronenakzeptorgruppe, 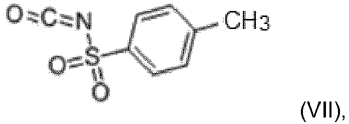 stehen, und eine Verbindung der Formel (I), wie diese im Anspruch 1 angegeben und definiert ist, gewonnen wird.

15. Verfahren zur Herstellung einer Verbindung nach einem der Ansprüche 11 und 12, vorzugsweise einer Verbindung zur Verwendung als Farbentwickler in einer Beschichtungszusammensetzung zur Herstellung eines wärmeempfindlichen Aufzeichnungsmaterials oder als Farbentwickler in einer wärmeempfindlichen Aufzeichnungsschicht oder als Farbentwickler in einer Streichfarbe zur Herstellung einer Beschichtungszusammensetzung oder einer wärmeempfindlichen Aufzeichnungsschicht, wobei das Verfahren die Umsetzung umfasst, von
(i) einer Verbindung (d.h. mit einem cyclischen Ester einer Hydroxycarbonsäure, einem Lactid) der Formel (IV) 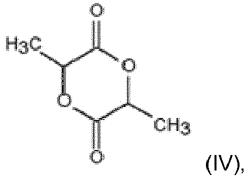 unter Ringöffnung des Lactids der Formel (IV), vorzugsweise in Gegenwart eines Katalysators, und gewünschtenfalls Polymerisation der durch Ringöffnung des Lactids der Formel (IV) erhaltenen Zwischenverbindung zu einer oder mehreren Verbindungen, umfassend mindestens eine strukturelle Einheit der Formel (IIIa) und/oder der Formel (IIIb) der Milchsäure bzw. deren Lactid, 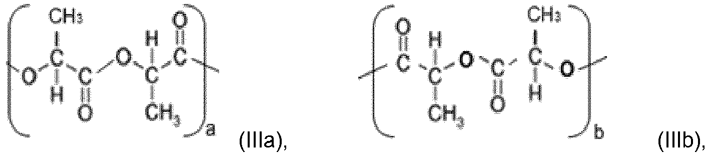 wobei unabhängig voneinander a und b eine ganze Zahl von 1 bis 10, vorzugsweise von 1 bis 6, weiter bevorzugt von 1 bis 3, ganz bevorzugt 2, sind,
und
(ii) wenigstens einer Vorläuferverbindung einer Elektronenakzeptorgruppe wie diese in Anspruch 3 definiert ist, vorzugsweise wenigstens eine Verbindung der Formel (VIa) und/oder der Formel (VIb), 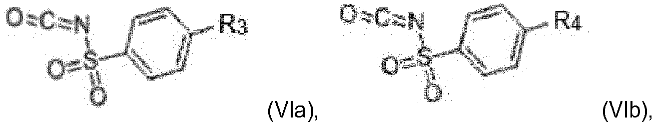 wobei R3 und R4 unabhängig voneinander für ein Wasserstoffatom, eine C1-C6-Alkylgruppe, eine C1-C6-Alkoxygruppe oder eine Halogengruppe, vorzugsweise für ein Wasserstoffatomoder eine Methylgruppe, weiter bevorzugt für eine Methylgruppe, besonders bevorzugt ein p-Toluolsulfonylisocyanat der Formel (VII) als Vorläuferverbindung einer Elektronenakzeptorgruppe, 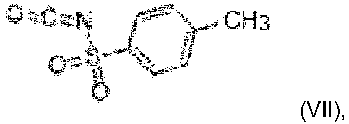 stehen,
und
(iii) des durch Umsetzung der Verbindungen der Formel (IV) und der Formel (VI), mit oder ohne vorhergehende Aufreinigung und/oder mit oder ohne vorhergehende Isolierung, erhaltenen Zwischenproduktes mit einer Verbindung der Formel (V), 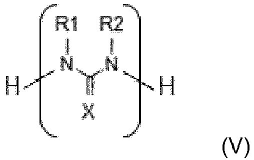 wobei X für O, S oder NH steht und R1 und R2 unabhängig voneinander für ein Wasserstoffatom, eine Methylgruppe, vorzugsweise für ein Wasserstoffatom, stehen,
und eine Verbindung der Formel (I), wie diese im Anspruch 1 angegeben und definiert ist, gewonnen wird.
